(19)

Europäisches
Patentamt
European
Patent Office
Office européen
des brevets

(11) **EP 1 849 539 A1**

(12) **EUROPEAN PATENT APPLICATION**

(43) Date of publication:
**31.10.2007 Bulletin 2007/44**

(51) Int Cl.:
***B22D 11/18*** *(2006.01)*        ***G01J 5/04*** *(2006.01)*

(21) Application number: **07008704.4**

(22) Date of filing: **27.04.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK YU**

(30) Priority: **28.04.2006 US 796074 P**

(71) Applicants:
• **ROSEMOUNT AEROSPACE INC.
Burnsville, MN 55306-4898 (US)**
• **Delavan Inc.
West Des Moines, IA 50265 (US)**
• **Delavan Limited
Solihull
West Midlands B90 4LA (GB)**

(72) Inventors:
• **Myhre, Douglas
Eden Prairie, Minnesota 55346 (US)**
• **Lenertz, Steven
Eagan, Minnesota 55123 (US)**
• **Siders, Randall Duane
Urbandale, Iowa 50323 (US)**
• **Griffith, Timothy
Urbandale, Iowa 50323 (US)**
• **Sheldon, William
Runcorn, Cheshire, WA71XP (GB)**
• **Percival, David, R.
Warrington, Cheshire, WA5 1UT (GB)**

(74) Representative: **Liska, Horst et al
Weickmann & Weickmann
Patentanwälte
Postfach 860 820
81635 München (DE)**

(54) **Active temperature feedback control of continuous casting**

(57)    The invention includes a system, method and machine readable program for dynamically controlling the casting of a material. Generally, the systems and methods described herein include an active control feedback system or aspects thereof including a temperature sensing device that is well-suited for the harsh environment of the interior of a caster such as a caster for casting metal. Temperature measurement can be accomplished either directly or indirectly. The system is configured to compare the measured temperature with an ideal casting temperature. The temperature sensing device is operably coupled to a cooling device that modulates a flow of coolant to dynamically cool the material being cast. In accordance with one embodiment of the invention, the cooling device includes a plurality of nozzles for delivering one or more cooling fluids to the material being cast.

**EP 1 849 539 A1**

**Description**

CROSS-REFERENCE TO RELATED APPLICATIONS

This application claims the benefit of priority of U.S. Provisional Application Serial No. 60/796,074 filed April 28, 2006. This application is related to U.S. Patent Application Serial No. 11/709,070 filed February 21, 2007. Each of these applications is incorporated by reference herein in its entirety.

BACKGROUND OF THE INVENTION

Field of the Invention

The present invention relates to continuous casting machines and particularly to the control of the secondary cooling in the continuous casting machines where molten metal is molded into cast slabs, strands, billets and the like.

Description of Related Art

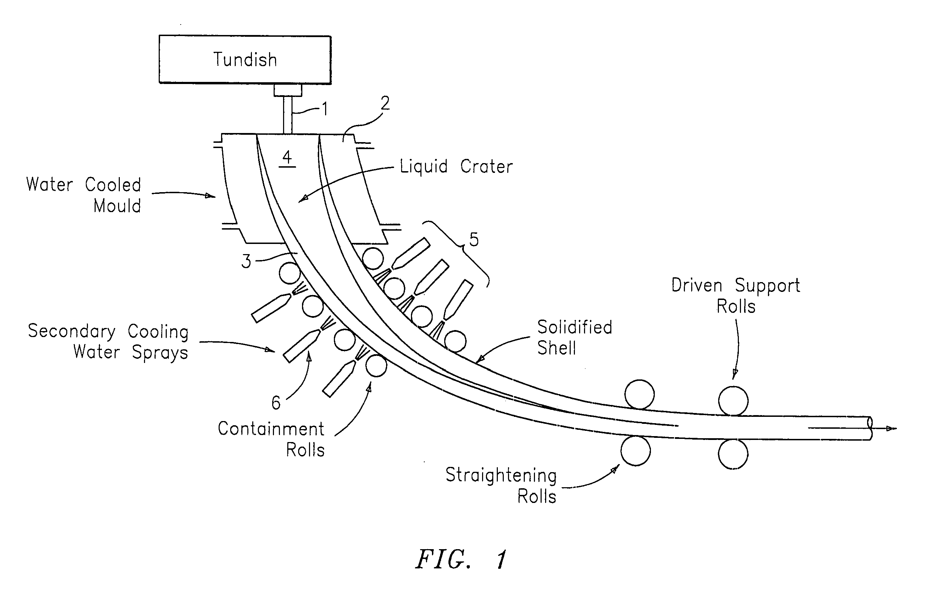

In a continuous casting machine (or "caster") as depicted in FIG. 1, molten metal 1 is poured into a cooled copper faced mold 2 which controls the physical width and thickness of the finished product. Metal exits the mold 2 in the form of a strand or slab having a thin shell 3 of solidified metal with a core 4 of molten metal. The strand continues into a secondary cooling zone 5 to further solidify the metal. As the metal passes through the machine it is gradually cooled (secondary cooling) with water sprays or water/air mix sprays 6 which are used to convert the molten metal from a liquid state to a semi-solid state as it changes direction from the vertical into the horizontal direction for handling and processing. The rate of cooling has a direct effect on the metallurgical characteristic of the metal being produced and there is an ideal cooling curve, known to those skilled in the art, that should be followed in order to achieve best product.
Unfortunately because of the design of modem continuous casting machines, limited control of temperature is possible. From the exit from the mold to the horizontal point, the continuous casting machine length is divided into zones and preset water flow values are available to increase or decrease the volume of cooling water to those zones in order to achieve an exit temperature from the zone. Currently, the metal surface temperature is measured with optical pyrometers or similar devices. However, no successful attempts have been made to integrate that temperature to a predetermined curve such as an ideal curve, and imprecise cooling is the result.
It is desirable to keep the surface temperature of the metal controlled in a manner to prevent surface cracks or internal defects, which may occur if the metal is cooled too quickly, or prevent a breakout of molten metal from the core of the slab. Breakout is a major problem. Breakout occurs when the thin shell of the strand of material breaks, allowing the still-molten metal inside the strand to spill out and foul the casting system, requiring an expensive shutdown. Often, breakout is due to too high a withdrawal rate, as the shell has not had the time to solidify to the required thickness, or the metal is too hot, which means that final solidification takes place below the straightening rolls and the strand breaks due to stresses applied during straightening. A typical breakout can cost a steel mill $250,000 and it is not uncommon to have two or three breakouts per month.
Either of these failures results in costly further processing, waste, or expensive and dangerous consequences to personnel and equipment. In particular, for the steel industry, properly controlled surface temperatures result in better quality of steel and increased production rates.
To minimize breakouts, the conventional wisdom is to follow empirically established cooling processes that tend to overcool the slab as it passes through the caster. This is accomplished by controlling the flow of coolant with the assistance of a series of preset flow rates. The preset rates are adjusted to achieve an approximate temperature at various points along the caster. While slab temperature is sometimes checked with a measuring device, this device is not integrated into the coolant control system. It is common to only have a fixed pyrometer at the exit from the caster prior to the slab being cut. The resulting lack of accurate temperature control during formation of the shell can affect the product quality because of the inability of the system to follow a preferred cooling rate.
Attempts have been made in the art to address these deficiencies by providing a feedback mechanism to control the cooling of the slab as it passes through the caster. For example, U.S. Patent No. 4,073,332 describes such a system. However, such systems suffer from certain deficiencies. An example of such a deficiency is the lack of temperature sensors that are suitable for the harsh environment inside of a caster, which tends to be extremely hot with very low visibility and high vibration. This is recognized in part by U.S. Patent No. 4,073,332 at Col. 5, lines 6-10. Moreover, it has been recognized by others that the approach described in U.S. Patent No. 4,073,332 is not practicable. For example, U.S. Patent No. 4,699,202 recognizes the deficiencies of U.S. Patent No. 4,073,332 at Col. 2, lines 8-21 in detail. The specifications of each of these patents are incorporated by reference herein in their entireties.
The need to improve the quality and the quantity of continuously cast materials with reduced down time are drivers in certain metal production industries, such as the steel industry. The state of the art still does not include a system for actively controlling continuous casting in a meaningful manner to truly maximize yield. There is still a long felt need in the art for such a system. The present invention provides a solution for these problems.

## SUMMARY OF THE INVENTION

The purpose and advantages of the present invention will be set forth in and apparent from the description that follows. Additional advantages of the invention will be realized and attained by the methods and systems particularly pointed out in the written description and claims hereof, as well as from the appended drawings.

To achieve these and other advantages and in accordance with the purpose of the invention, as embodied herein and broadly described, the invention includes a system, method and machine readable program for dynamically controlling the casting of a molten metal.

Generally, the system includes an active control feedback system or aspects thereof including a temperature sensing device that is well-suited for the harsh environment of the interior of a caster. Temperature measurement can be accomplished either by direct contact or non-contact methods. The system is configured to compare the measured temperature with a preferred casting temperature, such as an ideal casting temperature, at a particular point in the casting process. The temperature sensing device is operably coupled to a controller that controls a cooling device. The temperature sensing device may be provided with a purge gas line for removing debris from the area being measured. The cooling device, in turn, modulates a flow of coolant to dynamically cool the material being cast. In accordance with one embodiment of the invention, the cooling device includes a plurality of nozzles for delivering one or more cooling fluids to the material being cast. In accordance with a preferred embodiment of the invention, the nozzles deliver a spray comprising water and air. Dynamically delivering the coolant to the material in real time in response to temperature measurements of the material optimizes the efficiency of the casting system.

In accordance with another aspect of the invention, a method of continuous casting is provided. The method includes providing a caster and feedback system as described herein. The method further includes measuring the surface temperature of a stream of material as it exits the mold using a temperature sensing means. The measured surface temperature is then compared with a predetermined surface temperature value associated with a desired cooling profile. Based on the comparison, the flow rate of a cooling fluid inside of the caster is adjusted in response to a difference between the measured surface temperature and the predetermined surface temperature. Preferably, the metal exits the caster at a temperature that indicates its core has just solidified.

In accordance with a further aspect of the invention, a machine readable program containing instructions for controlling a caster for continuously casting a strand of material is provided. The program includes means for comparing a measured surface temperature of the strand of material with a predetermined surface temperature wherein the predetermined surface temperature is associated with a desired cooling profile. The program also includes means for adjusting the cooling means inside of the caster in response to a difference between the measured surface temperature and the predetermined surface temperature.

In accordance with a further aspect of the invention, the program further comprises means for providing individualized control of each of a plurality of nozzles or banks of nozzles through which cooling fluid is directed inside of the caster. The program may also include means for maintaining a substantially uniform surface temperature across the surface of the stream of material while it solidifies. Moreover, the program can also include means for sensing when a molten core of the stream of material breaks out through a solidified wall of the stream. In accordance with a further aspect of the invention, the machine readable program can also include means for controlling the speed of the caster. Means for controlling the surface temperature of the strand of material can also be provided by varying the speed of the caster. In accordance with still a further aspect of the invention, means for defaulting to a preselected cooling model can be provided in the event that a portion of the system fails, such as a temperature sensor or other component.

It is to be understood that both the foregoing general description and the following detailed description are exemplary and are intended to provide further explanation of the invention claimed.

The accompanying drawings, which are incorporated in and constitute part of this specification, are included to illustrate and provide a further understanding of the method and system of the invention. Together with the description, the drawings serve to explain the principles of the invention.

## BRIEF DESCRIPTION OF THE DRAWINGS

FIG. 1 is a diagram of a continuous casting system as is known in the art.

FIG. 2(A) is a diagram of a continuous casting system made in accordance with the present invention.

FIGS. 2(B)-2(C) are depictions of an exemplary embodiment of a cooling valve made in accordance with the invention.

FIG. 3 is a flow chart depicting operation of an active feedback control system made in accordance with the present invention.

FIGS. 4(A)-4(B) are views of representative embodiments of temperature measurement devices used in combination with an active feedback continuous casting control system in accordance with the present invention.

FIG. 5 is a view of another embodiment of a temperature measurement device used in combination with an active feedback continuous casting control system in accordance with the present invention.

FIG. 6 is a view of an embodiment of a temperature measurement device used in combination with an active feedback continuous casting control system in accordance with the present invention, including a roller adapted to roll against a material as it is being cast.

FIGS. 7-11 are views of embodiments of a temperature measurement device used in combination with an active feedback continuous casting control system in accordance with the present invention, including a member in sliding engagement with material as it is being cast.

FIGS. 12(A)-i2(B) are views of embodiments of a temperature measurement device used in combination with an active feedback continuous casting control system in accordance with the present invention, including a pyrometer.

FIGS. 13(A)-13(J) are views of embodiments of temperature measurement devices used in combination with an active feedback continuous casting control system in accordance with the present invention, utilizing air flows to facilitate temperature measurement, or aspects thereof.

FIG. 14 is a view of an embodiment of a temperature measurement device used in combination with an active feedback continuous casting control system in accordance with the present invention, utilizing electrical techniques.

FIG. 15 is a view of an embodiment of a temperature measurement device used in combination with an active feedback continuous casting control system in accordance with the present invention, including spectroscopic techniques.

FIG. 16 is a view of an embodiment of a temperature measurement device used in combination with an active feedback continuous casting control system in accordance with the present invention, including a heat flux sensor.

FIG. 17 compares an actual cooling curve for steel with an exemplary ideal cooling curve.

## DETAILED DESCRIPTION OF THE PREFERRED EMBODIMENT

Reference will now be made in detail to the present preferred embodiments of the invention, an example of which is illustrated in the accompanying drawings. The method and corresponding steps of the invention will be described in conjunction with the detailed description of the system. The systems and methods presented herein may be used for casting metals. The present invention is particularly suited for continuous casting of steel and steel alloys.

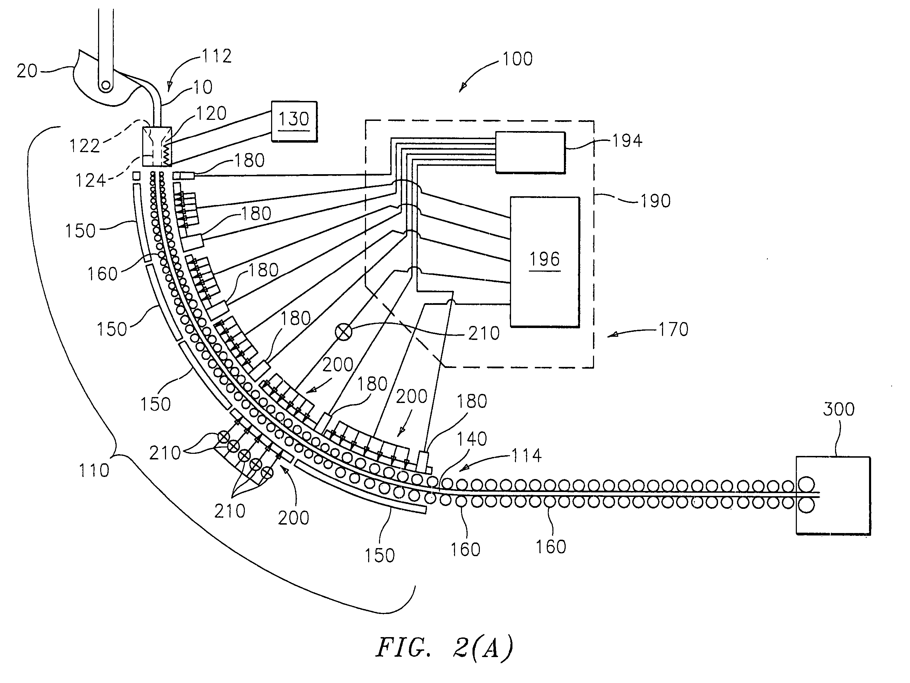

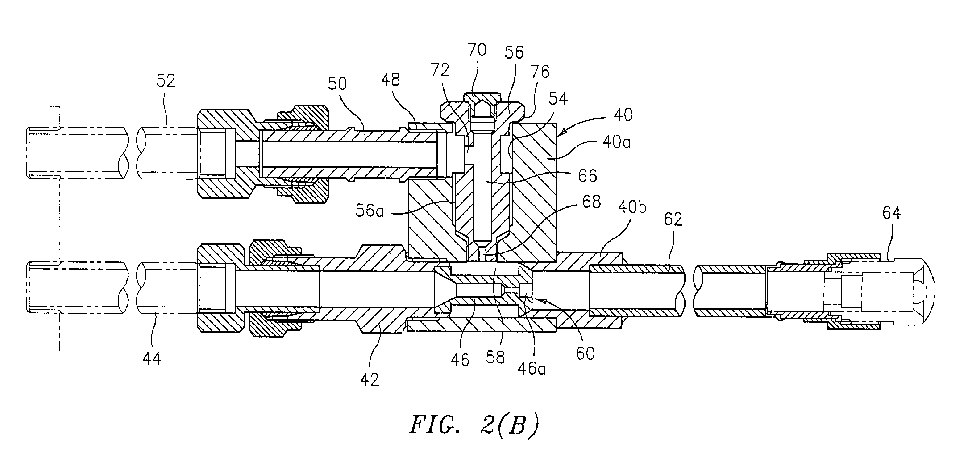

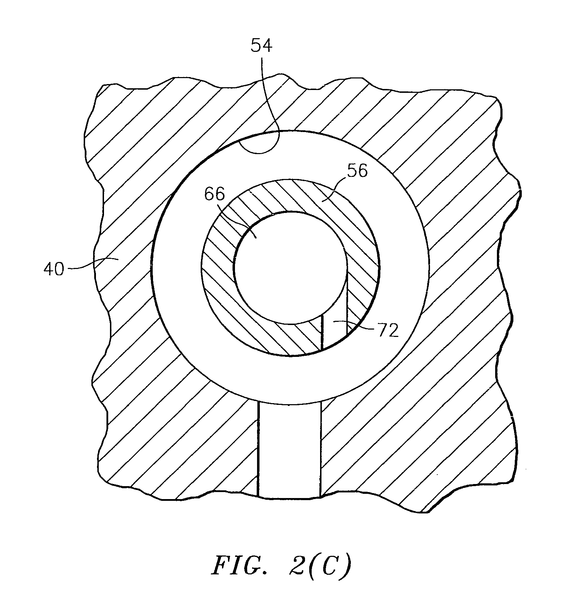

For purpose of explanation and illustration, and not limitation, a schematic view of an exemplary embodiment of the system made in accordance with the invention is shown in FIG. 2(A) and is designated generally by reference character 100. Other embodiments of a system in accordance with the invention, or aspects thereof, are provided in FIGS. 2(B)-16, as will be described.

In accordance with the invention, a system is provided for dynamically controlling the casting of a material. The system is adapted and configured to dynamically cool and solidify a stream of material being cast in accordance with a predefined cooling profile.

For purposes of illustration and not limitation, as embodied herein and as depicted in FIG. 2(A), system 100 includes a caster 110 that is adapted and configured to continuously cast a slab 140 of material, such as a metallic material. It will be understood that slab 140 can take on various other names such as a strand and the like, depending on the application. Caster 110 includes a first end or entrance 112 where molten material 10 is poured by a ladle 20 into a tundish 120. Tundish 120 acts as a reservoir for storing molten material 10 and includes an interior surface 122 that terminates in a mold 124. As material 10 is directed through tundish 120, a primary cooling system 130 removes heat from material 10 until a solidified skin forms on the material 10, resulting in a partially solidified slab 140 as material 10 exits the mold 124.

After exiting mold 124 within caster 110, slab 140 is guided through a plurality of caster segments 150 from a generally vertical direction to a generally horizontal direction. Slab 140 is guided by a plurality of rollers 160 within the caster segments 150. As slab 140 passes through caster 110, it is also cooled by a cooling means 170. Slab 140 is preferably cooled at a rate sufficiently high to maintain the thickness of the skin of slab 140 to prevent breakout, but sufficiently slow to prevent slab 140 from solidifying too quickly. Preventing overcooling of slab 140 reduces wear and vibration on rollers 160 and other portions of caster 110. When slab 140 has exited the caster 110 at caster exit 114, slab 140 has preferably been cooled to the point that it is solid throughout its cross section. After exiting caster 110, slab 140 is cut into predetermined lengths by a cutting mechanism 300. Each of these elements is discussed in further detail below.

While a horizontal caster 110 is depicted in FIG. 2(A), it will be understood that a variety of casting configurations can be used in accordance with the invention. For example, vertical casters can also be used. To illustrate this difference, in a horizontal casting machine as depicted in FIG. 2(A), the slab 140 exits the mould vertically and as it travels through the casting segments 150, the rollers 160 gradually curve the slab 140 towards the horizontal. By contrast, in a vertical caster, the slab 140 stays vertical as it is cooled.

It will be understood that caster 110 can be used to continuously cast a variety of materials 10, such as metallic materials. Specifically, caster 110 can be used to cast a wide variety of steel grades, other ferrous and non ferrous materials and the like. Moreover, virtually any mold 124 can be used as are known in the art. Mold 124 can have a cross section of a variety of shapes, including circular, ovoid, rectangular, "I" shaped and the like, as desired. Primary cooling system 130 includes a heat exchanger that is adapted and configured to remove heat from material 10 by way of fluid flow through a plurality of passages formed within or adjacent to tundish 120 and mold 124.

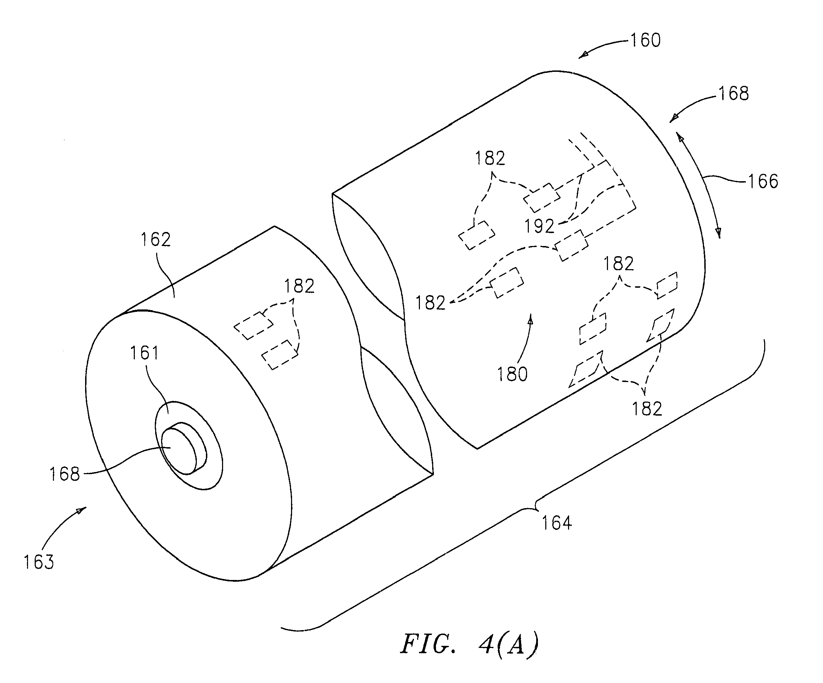

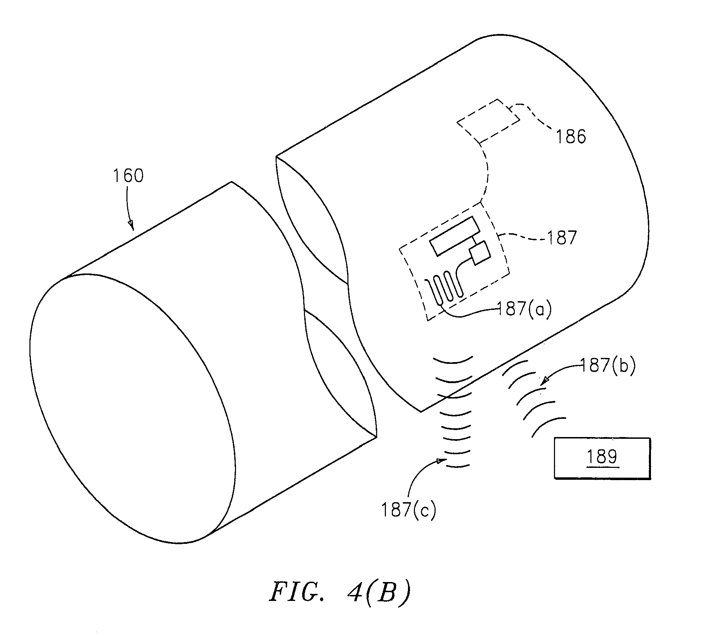

Any suitable number of caster segments 150 can be used. Generally, anywhere between four and eight caster segments can be suitable, depending on the material being cast, and the rate at which it is desired to cool the slab 140. Rollers 160 can be similar to those known in the art of casting. As depicted in FIG. 4(A), roller 160 includes an outer surface 162 defined by a width 164 and a circumference 166. Each roller 160 is supported by bearings at each end 168. The structure and materials of roller 160 are well known and are not repeated herein.

In further accordance with the invention, a cooling means is provided that is adapted and configured to dynamically cool and solidify the strand of material. As discussed herein, there is a long felt and unresolved need in the art for a cooling means including a practical and effective temperature measurement system for accurately measuring the surface temperature of a slab of material while inside of a caster. The present invention provides a plurality of novel solutions for this problem.

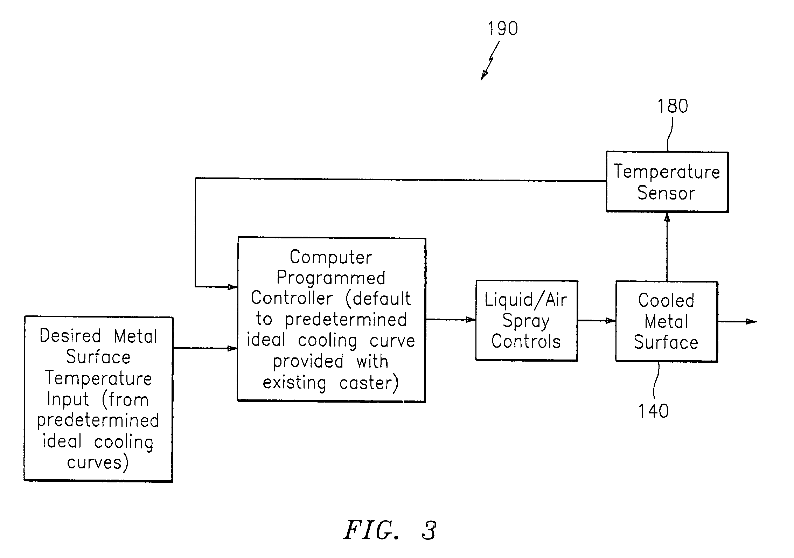

For purposes of illustration and not limitation, as depicted in FIG. 2(A), a cooling means 170 is provided as mentioned above. Cooling means 170 includes temperature measurement devices 180 that are operably coupled to a control system 190 (schematically depicted in FIGS. 2 and 3 and discussed in detail below) for dynamically controlling a plurality of cooling devices such as cooling nozzles 200, to dynamically cool the slab 140 of material as it passes through the caster. In accordance with a preferred embodiment, slab 140 is cooled in accordance with a predefined cooling profile before exiting the caster. In accordance with one embodiment, temperature measurement device 180 is adapted and configured to measure the temperature of slab 140 from the time it exits the mold 124 until it exits leaves the caster 110 at caster exit 114.

In accordance with one aspect of the invention, the temperature measurement devices 180 measure the temperature of the slab by way of direct physical contact.

For purposes of illustration and not limitation, as depicted in FIG. 4A, a first representative embodiment of a temperature measurement device 180 includes a device, such as a thermocouple 182, that is placed proximate the surface 162 of inside of a roller 160 as described herein. Thermocouple 182 can be placed on or immediately beneath the surface 162 of the roller to obtain a correlatable and real-time measurement of the surface 142 of slab 140 as the slab 140 rolls along roller 160. Moreover, a plurality of thermocouples 182 can be placed on or beneath the surface 162 of roller to provide discrete temperature measurements along the width 164 of roller as well as the circumference 166 of roller 160. Temperature measurement data collected by thermocouples 182 can be fed by one or more data transmission lines 192 into control system 190. Commutators 161 can be used at each end 163 of roller 160 to provide a link for signal transmission.

In accordance with an alternative embodiment, as depicted in FIG. 4B, a resistance temperature detector ("RTD") or temperature sensitive capacitor ("TSC") 186 can be operably coupled to a resonant circuit 187 embedded in the roller 160. As depicted, resonant circuit 187 can include a conductive winding 187(a) that is adapted and configured to couple with an electromagnetic wave 187(b) launched from a source such as a launching antenna 189 at a predetermined frequency. Once energized, circuit 187 can apply current across RTD or TSC 186 to generate a signal indicative of the temperature at that location. Resonant circuit 187 then broadcasts a signal 187(c) including the temperature information. As will be appreciated by those skilled in the art, resonant circuit 187 will have a resonant range over which it can receive and transmit radiation. In accordance with one embodiment, the resonant circuit has an operative range between about 14 MHz and 16 MHz. By scanning over a frequency range that includes these frequencies, such as from 10-20 MHz, it is possible to detect the signal emitted by the resonant circuit 187.

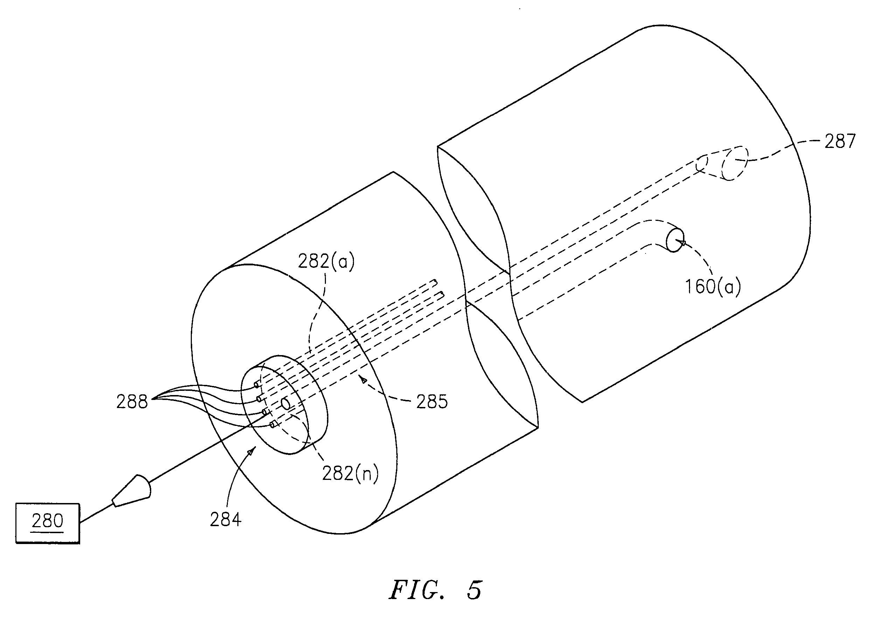

Alternatively, as depicted in FIG. 5, optical techniques can be used to measure the temperature on the inside surface of the roller 160 (or the surface of slab 140 itself through an aperture 160a defined in the roller), such as a pyrometer 280 that detects radiation from a point inside roller 160 through a fiber optic cable 282 and out through end 163 of roller by way of an optical commutator 284. Optical commutator 284 can take on a variety of forms. While one light path 285 could be provided through end 163 of roller 160 for measuring a single location inside roller 160, a plurality of fiber optic lines 282(a)-(n) can be disposed radially outwardly from the center of roller 160 such that the end 284(a)-(n) of each fiber optic line 282 at end 163 of roller completes a light path once per revolution of roller 160. The fiber optic line 282 connected to each end 288 can be directed to measure temperatures at different points 287 across the width of the roller 160 in order to obtain a temperature profile across the width of the slab 140.

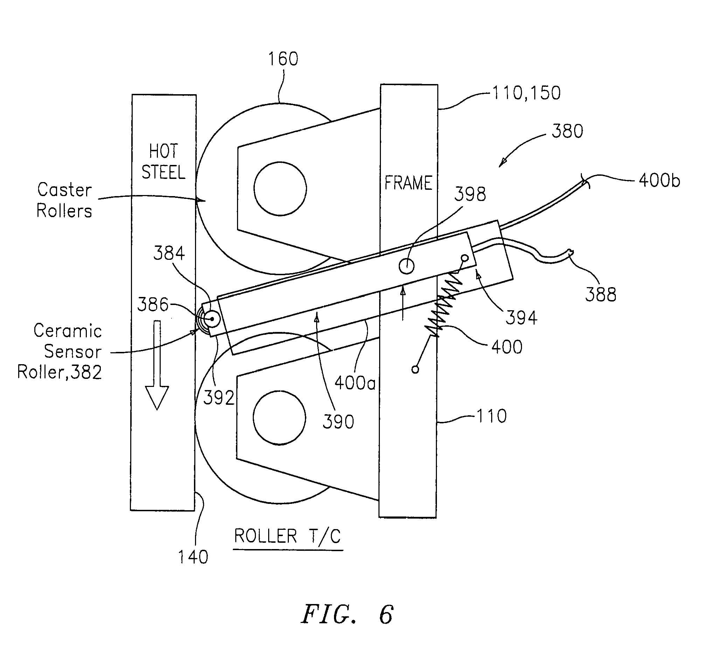

By way of further example, as depicted in FIG. 6, temperature measurement device 380 can include a roller 382 that is adapted and configured to selectively roll along slab 140. Roller 382 is disposed at a first end 392 of a beam 390. Beam 390 further includes a second end 394 and defines a pivot point 396 between the first end 392 and second end 394 of beam. A pin 398 pivotally connects beam 390 to caster 110. As depicted, beam 390 is located between adjacent rollers 160. A spring 400 connects second end 394 of beam 390 to the caster 110. Spring 400 is adapted and configured to urge roller 382 against slab 140 to facilitate temperature measurement thereof.

Roller 382 is rotatably mounted on an axle 384. Roller 382 can be made from a refractory material, such as a ceramic material or other materials, such as silicon carbide or alumina. Axle 384 contains a thermocouple 386 that is operably coupled to a signal line 388 that directs temperature measurements of slab 140 to control system 190. While thermocouple 386 actually measures the temperature inside of axle 384, temperature measurement device 380 is appropriately calibrated to indicate the surface temperature of slab 140 based on the measurement inside of axle 384. A purge gas flow may be applied to the wheel that reduces the error due to convection of water and steam, such as by way of purge gas channel 400a that surrounds beam 390 fed by gas supply line 400. In accordance with one embodiment, the thermocouple 386 is insulated inside of axle 384.

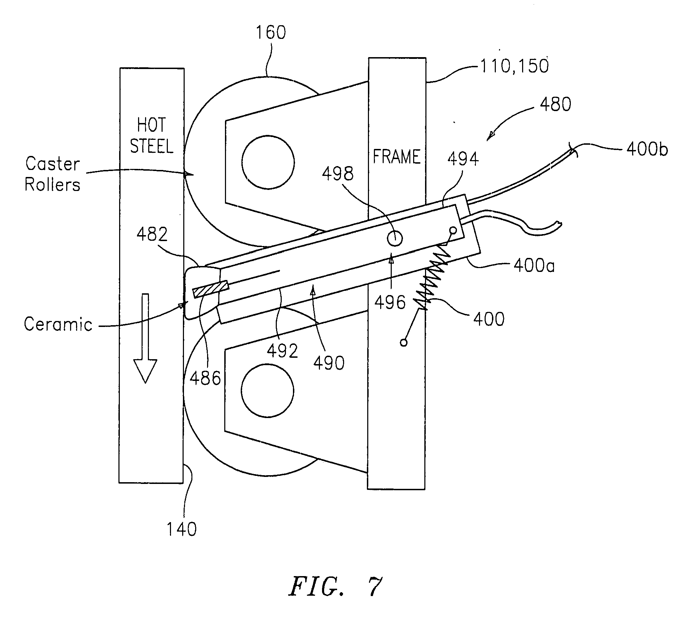

In accordance with a further alternative embodiment, as depicted in FIG. 7 temperature measurement device 480 is adapted and configured to slide against slab 140. As depicted, a skid 482 is provided at first end 492 of beam 490. As with the embodiment of FIG. 6, beam 490 further includes a second end 494 and defines a pivot point 496 between first end 492 and second end 494 of the beam, and pin 498 pivotally connects beam 490 to caster 110. As with the embodiment of FIG. 6, spring 400 is adapted and configured to urge skid 482 against slab 140 to facilitate temperature measurement thereof. Skid 482 can be made from ceramic material and have a thermocouple 486 disposed therein. As with the embodiment of FIG. 6, temperature measurement device 480 can be calibrated to correlate the temperature measured by thermocouple 486 with the actual surface temperature of slab 140. A purge air flow may be applied to the wheel that reduces the error due to convection of water and steam as with the embodiment of FIG. 6.

In further accordance with the invention, other embodiments of a temperature measurement device configured and adapted to drag against the surface of slab can also be used.

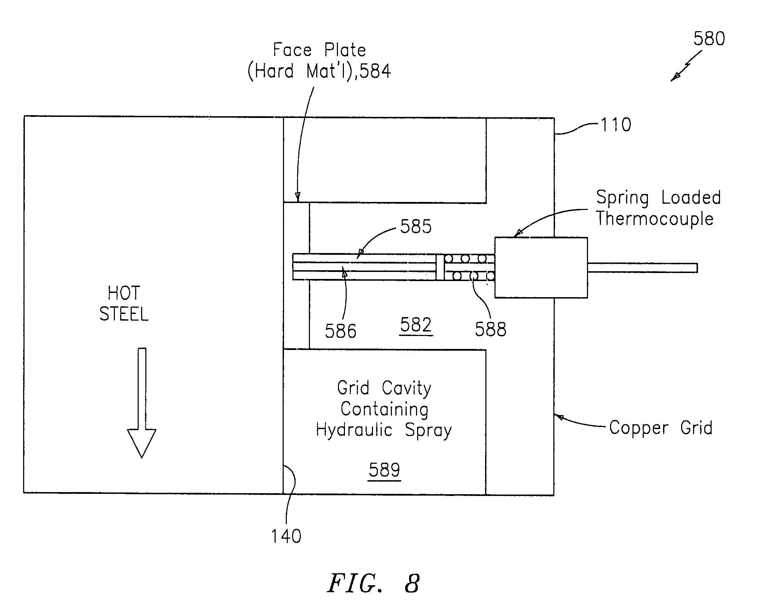

For purposes of illustration and not limitation, as depicted in FIG. 8, a temperature measurement device 580 is integrated into the structure of the caster 110. The structure of caster 110 can include a grid structure 582 defining a plurality of cavities 589. Cavities provide a space within which cooling sprays can flow to cool slab 140. Grid 582 can be provided with a face plate 584 that is adapted and configured to contact slab 140. A cavity 585 can be defined within grid 582 for housing a thermocouple assembly 586. If desired, thermocouple assembly 586 can be biased by a spring 588 against face plate 584 to improve thermal communication therewith. Face plate 584 is preferably formed from a material having a surface suitable for high temperature use. Grid 582 can be made from a variety of materials, such as copper alloys, beryllia (beryllium oxide), graphite and the like.

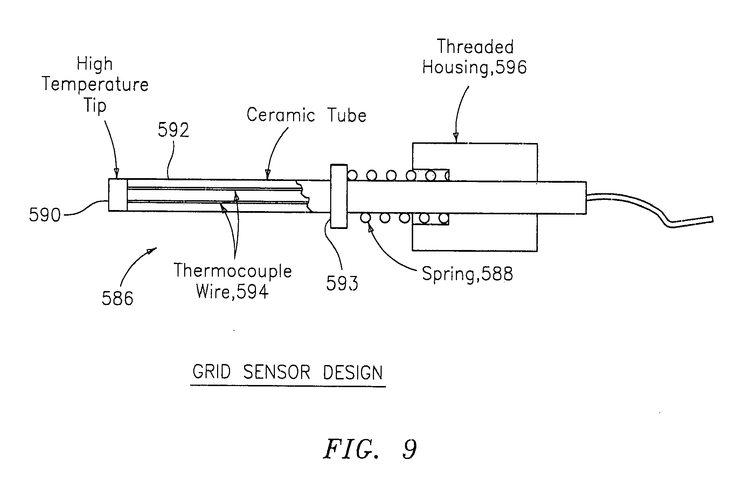

As depicted in FIG. 9, thermocouple assembly 586 can include a high temperature tip 590 fixedly attached to a tube 592 housing thermocouple wires 594. A threaded mount 596 can be provided into which ceramic tube 592 is inserted. If desired, threaded mount 596 can include threads (not shown) that are adapted and configured to cooperate with threads formed in housing 582 to facilitate installation and removal of thermocouple assembly 586. Ceramic tube 592 can be provided with a shoulder 593. As depicted, spring 588 pushes against shoulder 593 and mount 596 to cause thermocouple assembly 586 to urge against face plate 584.

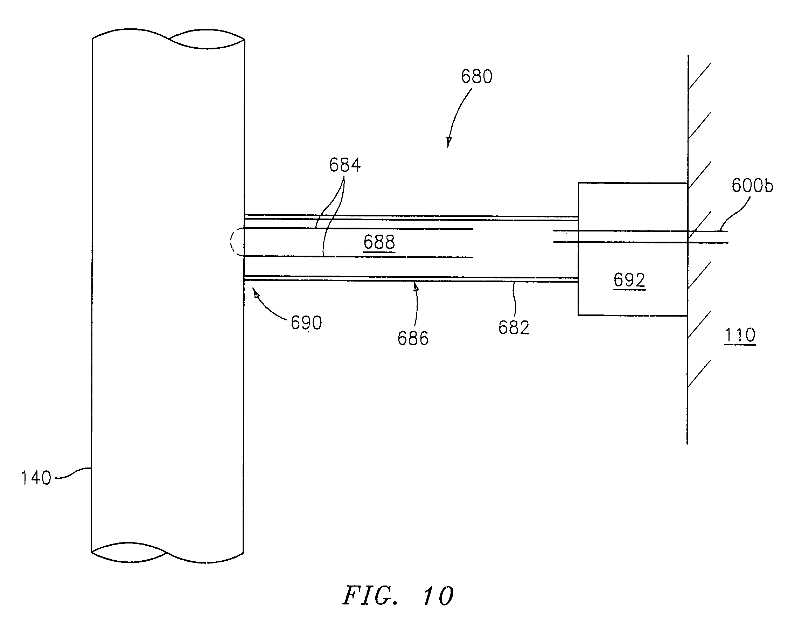

In accordance with another embodiment, as depicted in FIG. 10, temperature measurement device 680 is provided comprising a consumable thermocouple 686. As depicted in FIG. 10, consumable thermocouple 686 includes a generally tubular housing 682 that is preferably made from a metallic material. Housing 682 surrounds the operative portion of consumable thermocouple 686, which includes thermocouple wires 684, disposed in an erodable medium 688. Exposed end 690 of device 680 is urged into direct contact with the surface of slab 140 by urging means 692. In operation, a circuit is completed between wires 684, 686 through slab 140. Wires 684, 686 should be maintained in continuous contact with slab to permit continuous operation of device 680. It will be understood that measurements obtained from device 680 will vary depending on the environment in which the device is being operated. As such, it will be necessary to calibrate device 680 in order to correlate signals from device 680 with a given surface temperature of slab 140. As slab 140 passes over temperature measurement device 680, end 690 of device slowly erodes, consuming the material of the thermocouple. Urging means 692 can take on a variety of forms as disclosed herein. A purge gas, such as air, may be applied inside tubular housing 682 by way of source line 600b to reduce convective effect of water and steam.

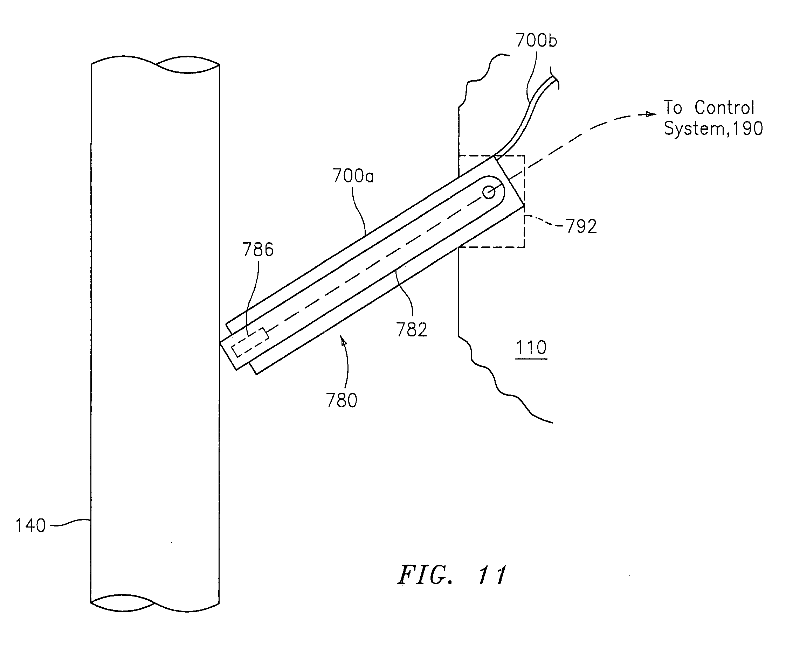

In accordance with another embodiment, as depicted in FIG. 11, temperature measurement device 780 can include a resilient housing, such as a tubular member 782 made from or coated with silicon carbide and housing a thermocouple 786. Signals indicative of heat detected by thermocouple 786 are accordingly transmitted through control system 190. Device 780 can be urged in sliding engagement with slab 140 by an urging means 792 such as those described herein. If desired, the contact between temperature measurement device and slab can be periodic. For example, a spring loaded temperature sensor can contact the slab every few seconds for a short period of time. This can extend the life of the temperature measurement device used. A purge gas flow may be applied as shown via conduit 700a and source line 700b to reduce the effects of water and steam.

In accordance with still a further aspect of the invention, the temperature sensing device is configured and adapted to measure the surface temperature of the material without physically contacting the material.

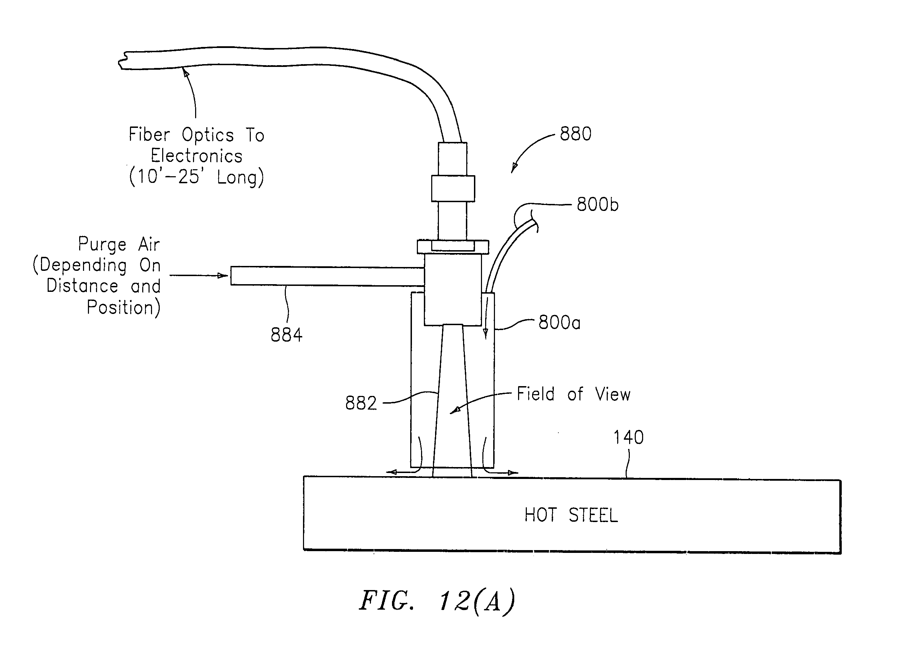

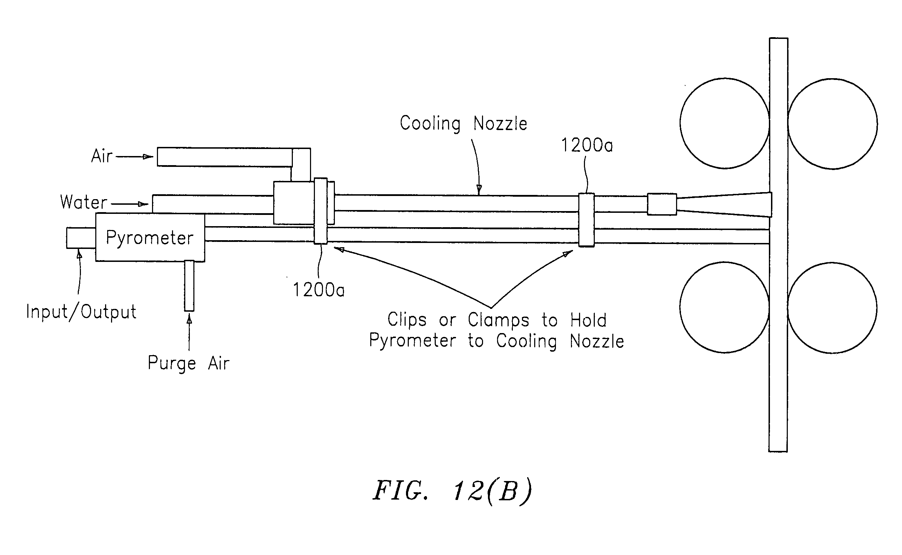

For purposes of illustration and not limitation, as embodied herein and as depicted in FIG. 12(A), temperature measurement device is provided in the form of a pyrometer 880 that is adapted and configured to view the surface of slab 140 to measure the temperature thereof. Pyrometer 880 includes an optical system having a field of view 882. If desired, purge air for cleaning pyrometer and preventing overheating can be provided by way of a purge line 884. Also, the purge tube shown can be used to prevent water and steam from impeding the radiation.

Suitable pyrometers 880 are disclosed in U.S. Patent Publication No. 2005/0247066A1 and U.S. Patent Publication No. 2006/0000219A1 and U.S. Patent No. 4,521,088, each of which is incorporated by reference herein in its entirety. Pyrometer 880 can be adapted and configured to scan across the surface of slab 140 to obtain a temperature profile across the width of slab 140. In accordance with one embodiment, an active millimeter wave pyrometer can be employed made in accordance with the teachings in U.S. Patent No. 5,785,426, which is incorporated by reference herein in its entirety. Pyrometer 580 can also be added downstream in the caster 110 at the edge of the slab 140 to measure the surface temperature at the slab edge. Such a construction may be used to detect cracks at the edge of slab 140, since cracking causes sharp changes in the emissivity of the surface of the slab which are detected by the pyrometer.

FIG. 12(B) depicts a method for holding the pyrometer in the caster by utilizing the cooling nozzle for a convenient attachment. Also, magnetic clamps 1200a may be used to hold the pyrometer on the caster in any position due the fact they are made from steel.

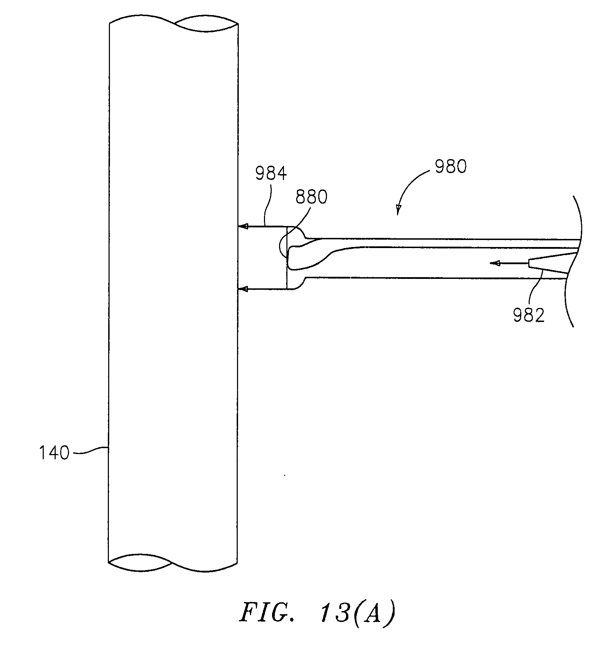

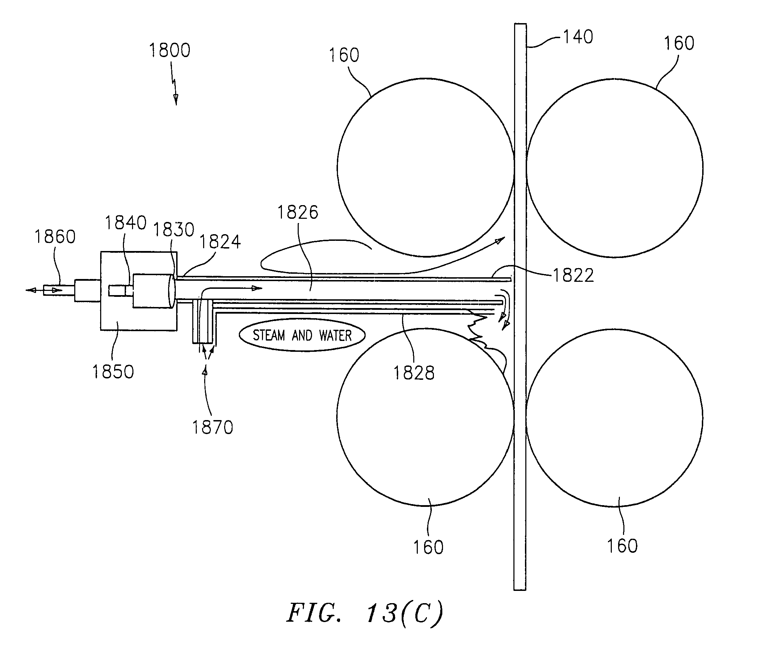

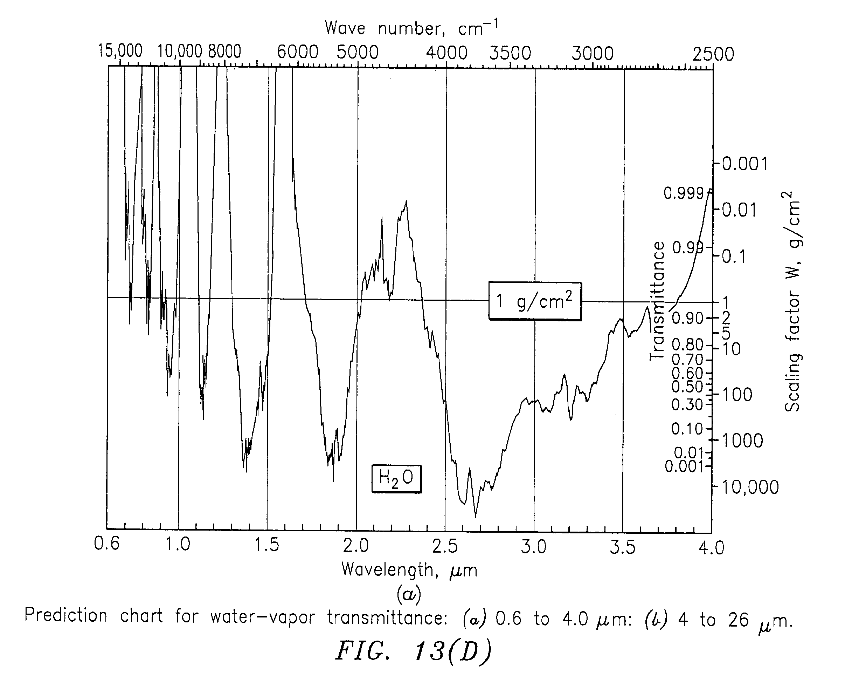

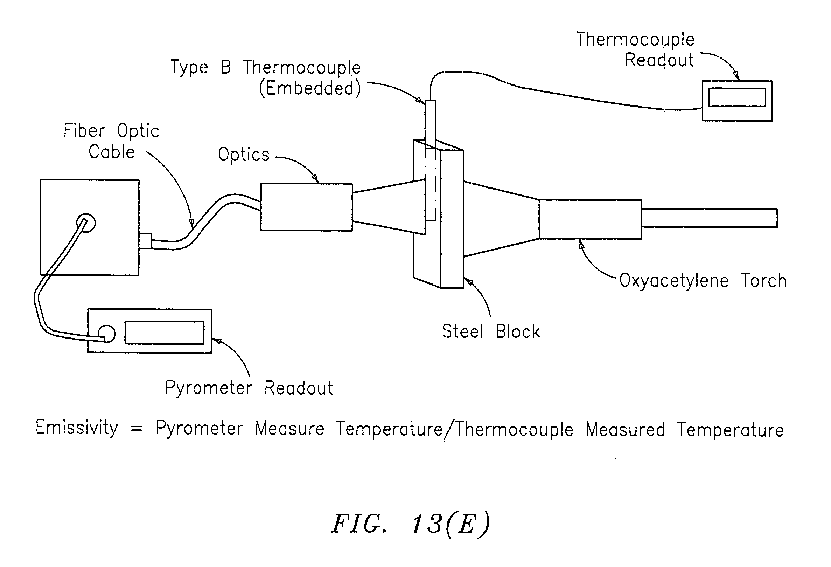

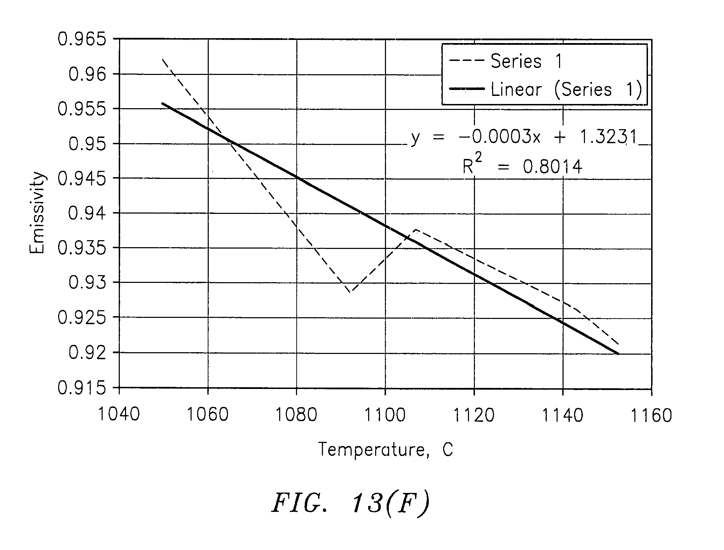

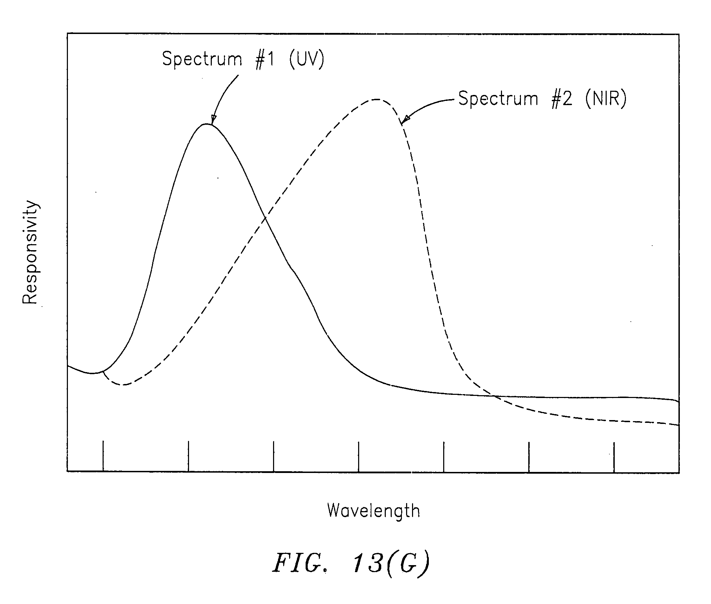

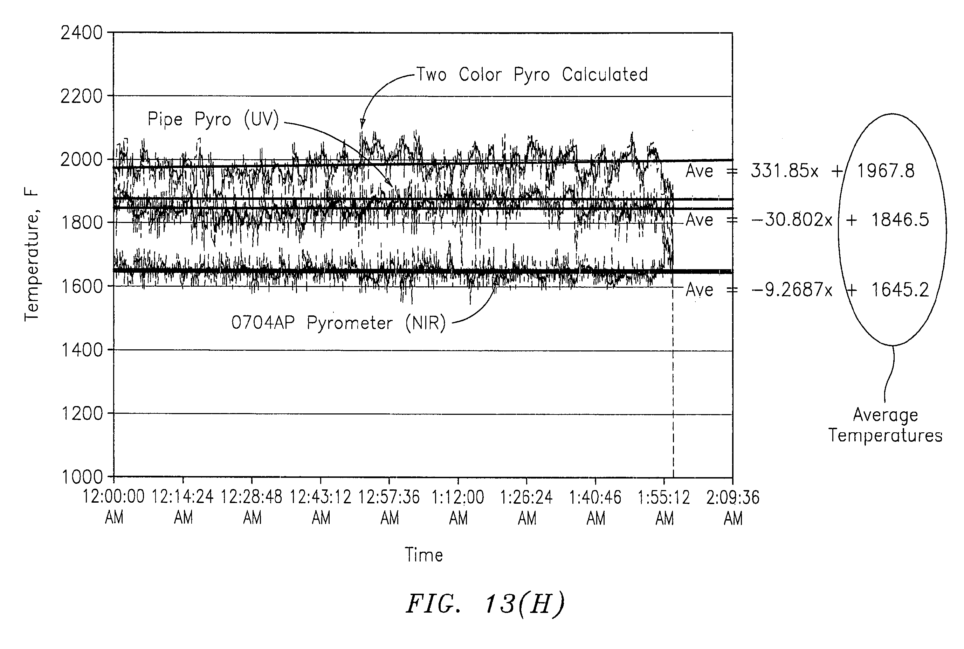

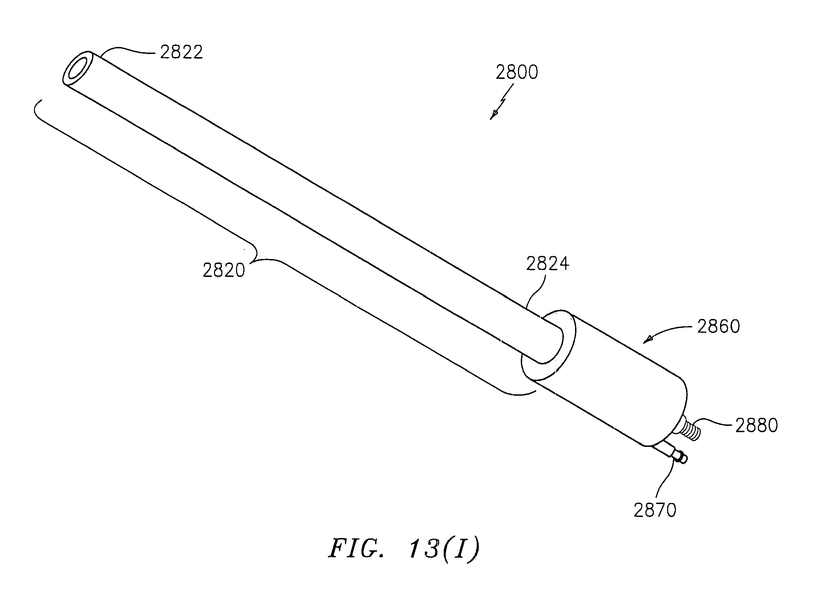

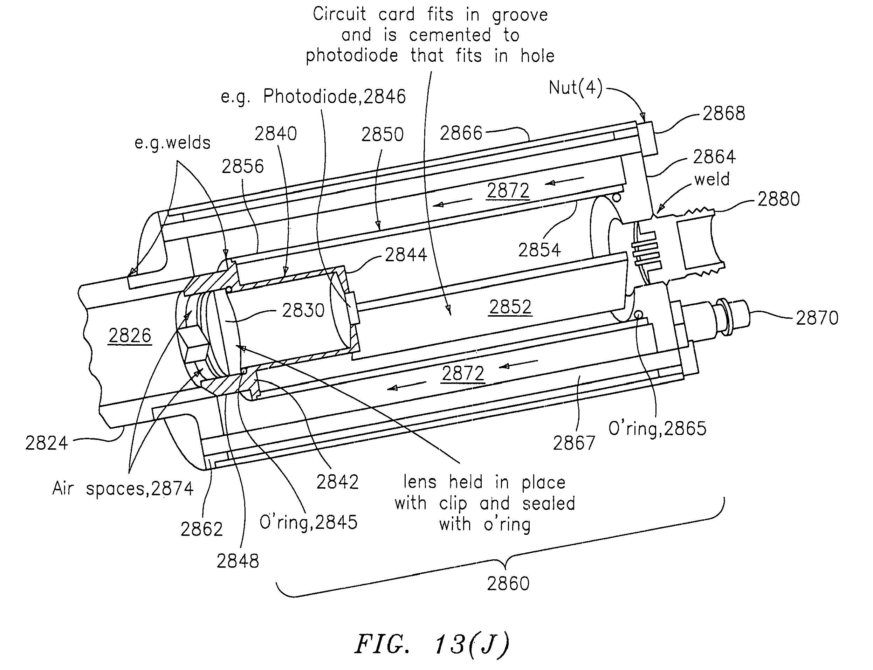

By way of still further example and as depicted in FIG. 13(A), a temperature sensor 980 (such as pyrometer 880) can be mounted close to the moving slab in operable communication with an air nozzle 982 adapted and configured to provide an air jacket 984. Air jacket 984 acts to prevent overheating of sensor 980, and helps prevent sensor 980 from becoming fouled, as well as maintaining clarity of the radiation path substantially free of debris. Further details on such sensors are described in U.S. Patent No. 5,146,244, U.S. Patent No. 4,836,689 and U.S. Patent No. 4,786,188, the disclosure of each being incorporated by reference herein in its entirety.

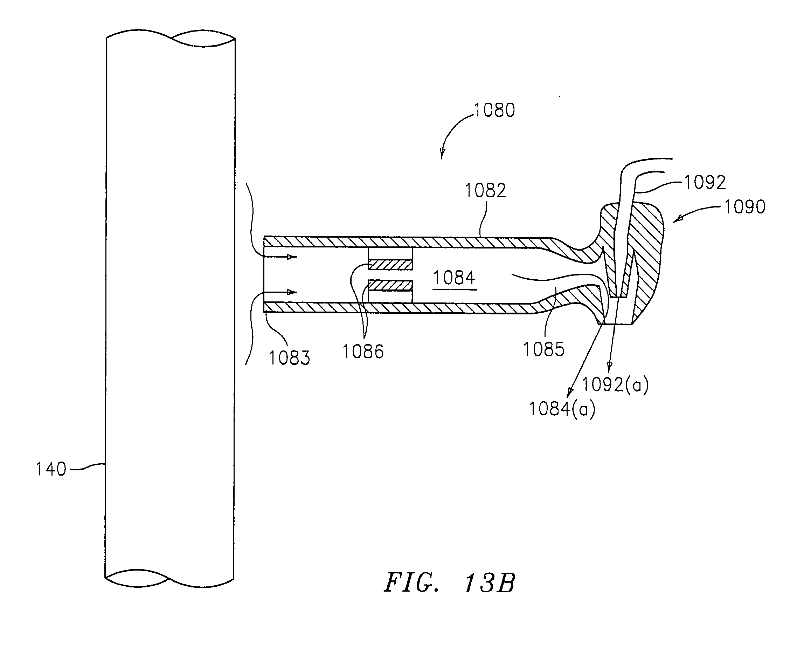

By way of further example, the temperature of the surface of slab 140 is measured by measuring the temperature of air proximate the surface of the slab. For purposes of illustration and not limitation, as embodied herein and as depicted in FIG. 13(B), temperature measurement device 1080 includes a housing 1082 defining a flow passage 1084 having a first end 1083 and a second end 1085 in which one or more thermocouples 1086 are disposed. Flow is induced through first end 1083 and into passage 1084 to cause air or other gas proximate surface of slab 140 to be drawn through passage 1084 and over thermocouple 1086 and then at the second end 1085 to obtain an estimate of the temperature of slab 140. Flow can be induced through passage 1084 in a variety of ways as are known in the art. For example, a Venturi pump 1090 can be fluidly attached to second end 1085 of passage 1084. A high speed gas jet 1092(a) can then be directed through passage 1092 of pump 1090 to induce flow 1084(a) through passage 1084. Venturi pumps such as pump 1090 are commonly made from materials such as steel and the like.

By way of still further example, as depicted in FIG. 13(C), a temperature sensor 1800 may be provided including a photon sensing device, such as a pyrometer that is adapted and configured to measure the temperature of the slab 140 by characterizing the energy of photons received from the slab 140. More specifically, temperature sensor 1800 includes an extended tubular member or hollow tubular member or conduit 1820, having a first end 1822 and a second end 1824 to permit passage of photons emitted by the surface of slab 140 to a lens 1830. Photons are then focused on a photon sensor 1840, such as a photodiode to generate electrical signals processed by electronics 1850 that are output via cable 1860 to the control system as described herein. A compressed gas input 1870 is provided to direct purge gas across lens 1830 to keep lens 1830 clean, and to maintain the radiation path between lens 1830 and slab 140 substantially clear.

Tubular member 1820 may have any suitable dimensions. Generally, it is desired that the gas purge discharged second end 1822 of tubular member 1820 have a sufficiently high velocity to clear debris (e.g., steam and water) from the line of sight of lens 1830. Preferably, the average gas velocity is greater than about 100 feet per second. More preferably, the average gas velocity is greater than about 200 feet per second or more.

It will be further appreciated that the gas purge may be sent down the passage 1826 of member 1820, and/or down one or more supplemental purge lines 1828. Specifically, by using supplemental purge lines 1828 it is possible to eject a high speed flow in the viewing area while minimizing the volume flow rate of the purge gas. Moreover, while a gas purge can still be directed through passage 1826, such a flow can be used to primarily cool the passage and upstream optics and electronics. Such an arrangement also permits the diameter of passage 1826 to be increased to collect additional photons but without significantly increasing the need for a purge gas flow.

In accordance with one embodiment that was tested, the dimensions of the tubular member 1820 was 2 feet long by 0.9 inch inside diameter pipe (3/4" schedule 10 pipe). A single lens 1830 was employed having a two (2) inch focal length to collect radiation passing through passage 1826 and focusing it on the photon sensor 1840. The length of the extension was chosen primarily based on practical considerations of the particular testing application. For example, clearances in the caster 110 may guide the choice of certain dimensions. However, it will be appreciated that tubular member 1820 may be of any suitable length. Generally, a short probe may be more difficult for an installer to reach in and secure. Also, the closer the optics and electronics are to the steel slab 140, the greater is the risk of thermal effects on the electronics. Moreover, if a break out of the molten core of the slab 140 were to occur, it is likely that more damage could occur to the sensor 1800. The purge gas was air supplied from a compressed air source at a line pressure of about 90 pounds per square inch.

In accordance with one embodiment, first end 1822 of conduit 1820 may be cut on an angle to cause the purge gas to blow debris (e.g., soot, water and steam) out of the field of view of lens 1830. Using an extended conduit with a gas purge as described herein has been found to be effective in maintaining a clear radiation path between the slab and the photon sensing device. Specifically, upstream portions of a caster near the mold are the hottest, and the most occluded by steam, water and soot.

However, use of a sensor such as 1800 avoids these problems. Moreover, spacing the photon sensing device portion of the sensor a distance from the slab also has the benefit of exposing the electronics to a less harsh environment.

As further depicted in FIG. 13(C), first end 1822 of tubular member 1820 is angled. In the depicted embodiment, the angulation is achieved by cutting end 1822 at an angle, such as about 10 degrees from an axis perpendicular to a longitudinal axis defined by the tubular member. This angulation effectively causes flow to be directed in the direction of the shallow end of the cut as it exits the tubular member. This helps clear debris from the viewing area of the sensor.

As will be appreciated, for any of the embodiments disclosed herein utilizing an optical pyrometer as a device to measure the temperature of slab 140 (including but not limited to sensor 1800), a variety of optical pyrometers may be used. For example, a pyrometer may be used in any suitable region of the spectrum. For example, a pyrometer may be used that is particularly sensitive to the ultraviolet ("UV") region of the spectrum. In accordance with one embodiment, a UV pyrometer may be used that is sensitive to wavelengths shorter than about 0.5 microns, such as from about .35 microns to about .45 microns. These wavelengths are relatively high energy wavelengths and are more effective at penetrating the harsh environment of a caster to reach a pyrometer. Moreover, such wavelengths appear to be well suited for measuring the temperature of oxidized steel (about 1700°F - about 2100°F), and are less susceptible to error as a result of slag formation on the surface of slab, which is a random occurrence. However, a NIR pyrometer when used with a gas purge as described herein also provides successful results.

Water absorption of photons is a problem because of the water used to spray the surface of slab 140 to cool the slab creates an absorption barrier between the pyrometer and the slab. For example, FIG. 13(D) depicts the absorptivity bands (in terms of transmission) for water vapor.

Variable emissivity is another problem endue to the slag that forms on the slab surface causing the emissivity to vary significantly. Slag and bare metal vary in emissivity with wavelength and temperature. The emissivity of such oxidized surfaces is typically .9 to .96. To illustrate the accuracy of UV temperature measurement, a test was run using a piece of carbon steel that was heated on one side using an oxyacetylene torch as depicted in FIG. 13(E). The temperature of the steel was measured with a type B thermocouple and a pyrometer on the side opposite the torch. The data collected is shown in FIG. 13(F). The pyrometer utilized a silicon photodiode that was filtered to detect wavelengths from about .35 micron to about .45 micron. Based on these results, it can be determined that this spectral range is favorable for measuring oxidized steel and can easily be corrected for the average emissivity over the temperature of use with only a small effect on the accuracy. The emissivity of slag on a surface of a steel strand varies least from the steel at these shorter wavelengths. As such, measurement of photons emitted by slab 140 at shorter wavelengths can be expected to give less temperature error when the pyrometer is observing steel or slag.

Moreover, a two color pyrometer may be used to obtain an accurate surface temperature measurement. A two color pyrometer makes measurements in two wavelength regions and electronically takes the ratio of these measurements. A preferred embodiment would have a spectrum covering wavelengths from 300 nm to 500nm and another spectrum covering 300nm to 1000nm, as depicted in FIG. 13(G). The primary advantage of the two color (or spectrum) pyrometer is its ability to cancel out the emissivity of the measured surface for improved accuracy. If the emittance is the same for both wavelengths, the emittance cancels out of the result, and the true temperature of the target is obtained. It is believed that this gray-body assumption is sufficiently valid in the context of the present invention to provide a "color temperature" measured by a two color pyrometer that is close to the true temperature of slab 140. Preferably, at least one of the wavelengths detected by the two color pyrometer is in a UV wavelength range as described herein.

EXAMPLE

TESTING OF IN SITU UV PYROMETER AND TWO-COLOR PYROMETER

Testing was performed at a steel mill during a continuous casting process.
The test employed a temperature sensor similar to sensor 1800 described above including a UV pyrometer to measure the steel temperature. A NIR (near infrared) pyrometer was also mounted at the same location with a tubular member having a gas purge as described herein. Data was examined to compare the accuracy of the spectra obtained from the two pyrometers.

The UV pyrometer utilized silicon photodiodes as photon sensors. Two of the photodiodes were filtered with a color glass filter. This provided a useable spectrum of about 350 nm to 450 nm, well overlapping the UV portion of the electromagnetic spectrum. The NIR pyrometer was a Goodrich production model modified to include a purge line. The NIR pyrometer uses a silicon photodiode that is not filtered. It has a standard silicon responsivity with a peak sensitivity at about 850 nm.

FIG. 13(H) depicts the output data taken for a period of time. The NIR temperature profile is the lowest temperature profile. The UV pyrometer profile is the temperature profile in the middle, and a calculated two-color temperature is the top temperature profile. As can be seen, the measured temperature of the UV pyrometer was significantly closer to the true temperature than the NIR pyrometer.

Curve fit equations for each pyrometer in this example can be represented as:

$$T_1 = A_1(E_1g)^{B1} \qquad (1)$$

$$T_2 = A_2(E_2g)^{B2} \qquad (2)$$

A and B are curve fit constants and "g" represents the gain needed to make the temperatures $T_1$ and $T_2$ equal (1/emissivity). $E_1$ and $E_2$ are pyrometer outputs. Setting temperatures equal and solving for g:

$$g = (A_1E_1^{B1}/(A_2E_2^{B2}))^{(1/(B2-B1))} \qquad (3)$$

Therefore, the if the gain correction is solved at each data point the corrected temperatures can be solved for at each point. This was plotted in Fig. 13(H) as the uppermost data set. For this particular example, the gain correction averages 7.13 which equates to an average emissivity of .14.

Still another embodiment of a temperature measurement device 2800 is depicted in Fig. 13(I) having an elongate tubular member 2820 with a first end 2822 and a second end 2824 secured to a housing 2860. Device 2800 operates similarly to device 1800, in that both devices use a purge gas in combination with a pyrometer. Fig. 13(J) depicts a magnified cross sectional view of the housing portion 2860 of device 2800. As depicted, second end 2824 of tubular member 2820 is connected to a first end cap 2862 of housing 2860. Housing further includes a second end cap 2864, and a generally cylindrical wall 2866 disposed between end caps 2862, 2864. The housing assembly is held together by a plurality of bolts 2867 and nuts 2868.

Inside housing 2860, an intermediate electronics compartment 2850 is defined having an electronics board 2852 disposed therein operably coupled to a sensor 2846, such as a photodiode. Electronics board 2852, in turn, is attached to a connector 2880 to direct signals out of device 2800 to a terminal location, such as a computer (not shown). Electronics compartment 2850 is attached at a first end 2854 to end cap 2864 and at a second end 2856 to a sensor housing 2840. First end 2842 of sensor housing 2840 houses a lens 2830 held in place with a clip (not shown) and an o-ring 2845. Sensor 2846 is disposed in a second end 2844 of sensor housing 2840. A plurality of struts or spacers 2848 space housing 2840 from end cap 2862 to define a plurality of gas purge passages 2874. Purge gas is provided through purge inlet 2870 and directed through annular space 2782 defined between wall 2866 and housing 2850, through passages 2874 and through tubular member 2820. Such a gas flow arrangement helps cool the optics and electronics in device 2800. Moreover, as will be appreciated, such an arrangement greatly facilitates maintenance of device 2800. For example, housing 2860 of device 2800 may be disposed outside of the caster and tubular member 2820 may protrude through a wall of the caster. To perform maintenance on the contents of housing 2860, all a technician need do is remove nuts 2868 and pull out the assembly including electronics housing 2850 and sensor housing 2840.

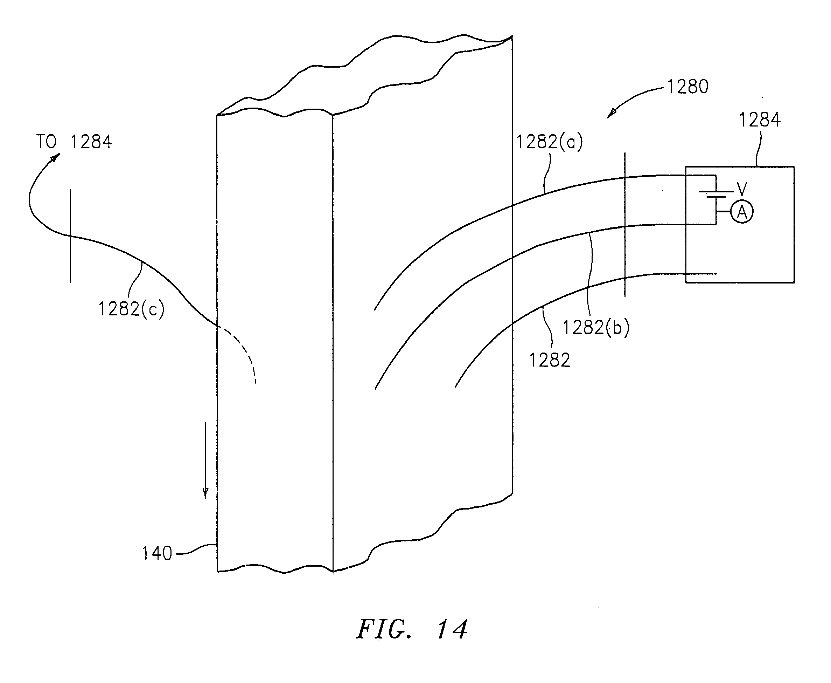

In accordance with another embodiment, as depicted in FIG. 14, temperature measurement device 1280 includes means for measuring the electrical conductivity of the slab 140. For example, as depicted in FIG. 14, electrodes 1282 can be provided that are adapted and configured to contact the surface of slab 140. Preferably, the electrodes 1282 include tips made from a hardened refractory material, such as tungsten, so that they penetrate the surface of slab 140 to ensure constant electrical communication therewith. A voltage is imposed across the electrodes 1282 through the slab 140 to measure the conductivity of the slab. Based on electrical measurements, it is possible to compute the electrical resistivity of slab 140. Electrical resistivity is a known function of temperature for different materials. Thus, based on a resistivity measurement, it is possible to measure the temperature of the slab based on known values of electrical resistivity as a function of temperature.

Moreover, if desired, an array of electrodes 1282 can be provided with a switching mechanism 1284 to obtain conductivity measurements across different portions of the surface of the slab, such as between electrodes 1282(a) and 1282 (b), or through the slab such as between electrodes 1282(a) and 1282(c). It will be appreciated by those skilled in the art that any suitable number of electrodes can be used and positioned as desired to obtain as many different conductivity measurements and hence, temperature measurements as desired.

In accordance with still another aspect, the temperature of the slab can be sensed using phosphor thermometric techniques. For purposes of illustration and not limitation, as embodied herein, it is possible to measure the temperature of slab 140 by employing one of a variety of thermographic techniques. For example, such surface measurement techniques are described in literature published by Oak Ridge National Laboratory (see http://www.ornl.gov/sci/phosphors/galv.htm). Systems employing such methods to measure the temperature of materials such as a moving substrate are described, for example, in U.S. Patent No. 6,123,455, U.S. Patent No. 5,986,272, and U.S. Patent No. 5,949,539, the disclosure of each of which is incorporated by reference herein in its entirety.

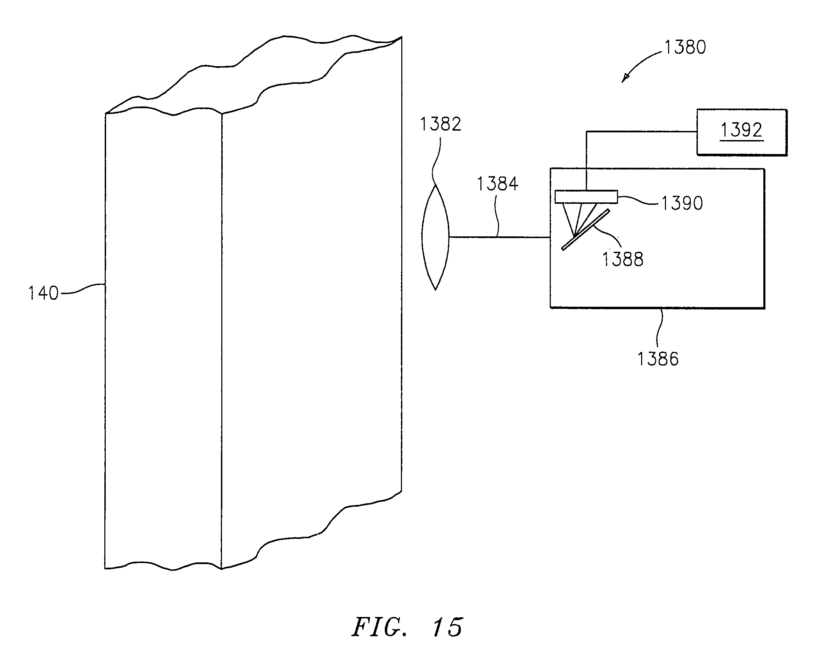

As depicted in FIG. 15, once the phosphor material is introduced onto the molten metal, the light level emitted can be viewed, for example, with a temperature measurement device 1380 comprising a spectrometer. This can be accomplished, for example, by viewing the light emitted by the trace element with a lens 1382, and directing the light through fiber optic lines 1384 to a spectrometer 1386, wherein the spectrum is separated using a grating 1388 to permit observation of the atomic transitions of the trace elements via a photodetector array 1390 operably coupled to a graphical user interface 1392, such as a personal computer. For example, a Time Rate of Decay (TRD) method can be used to measure temperature. In a TRD method, pulses of a fluorescent material are injected into the cooling spray. Fluorescing material will emit radiation at different energies (having a specific wavelength) depending upon temperature of the fluorescing material. Accordingly, it is possible to determine the temperature near the slab surface by correlating the wavelength rate of change of the intensity of the radiating fluorescing material with a temperature. Thus, a temperature profile of slab 140 may be obtained by viewing the change in the emission of the phosphor coating.

In accordance with an alternative embodiment, if desired, one or more rollers 160 can be coated with a coating that emits light in accordance with its temperature. Suitable coatings include thermographic phosphors and other temperature sensitive coatings. As with the previously described technique, emitted light can be viewed and processed to estimate the temperature of the surface of slab 140.

In accordance with still another aspect, the temperature of the slab can be sensed by measuring heat flux.

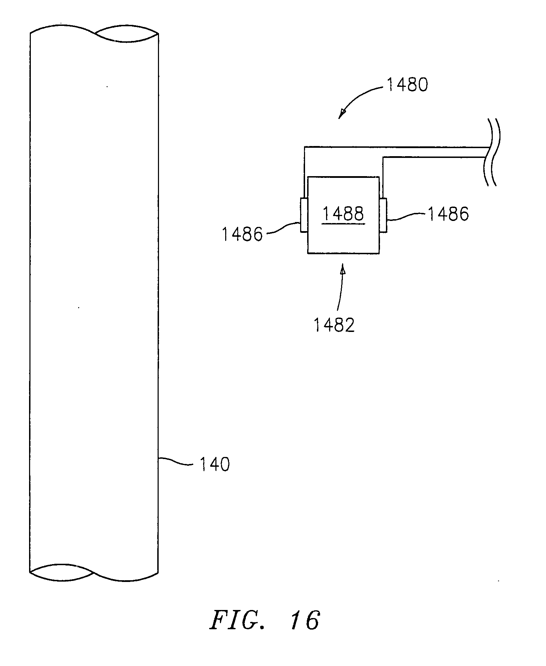

For purposes of illustration and not limitation, as embodied herein and as depicted in FIG. 16, temperature sensing device 1480 employs a heat flux sensor 1482 to detect heat given off by slab 140. Heat flux sensors are known in the art, and generally comprise two thermocouples 1486 separated by a material of known thermal conductivity 1488. It will be understood that the measured heat flux can be empirically correlated to a surface temperature of the slab. The configuration of FIG. 7 could also be used as a heat flux sensor with the thermocouple replaced with a heat flux sensor.

In further accordance with the system of the invention, the cooling means includes a coolant delivery system such as nozzles for delivering coolant to the slab. For purposes of illustration and not limitation, as depicted in FIG. 2 (A), cooling devices such as nozzles 200 can direct coolant such as water, or a mixture of water and air toward slab 140. Suitable nozzles are described, for example, in U.S. Patent No. 6,036,116, U.S. Patent No. 6,729,562, U.S. Patent No. 6,578,777, and U.S. Patent Application Serial No. 11/736,810, filed 18 April 2007, among others. Each of these documents is incorporated by reference herein in its entirety. Nozzles 200 can be arranged in any suitable configuration inside of caster segments 150. In accordance with a preferred embodiment, nozzles 200 are arranged individually or in banks across the width of the slab 140. In accordance with another embodiment, each nozzle 200 is provided with an individually controllable valve 210. Suitable valves include, for example, solenoid controlled valves, or a valve adapted and configured for air actuator control in conjunction with an electrical solenoid or electrical motorized actuator control. The valve structures can comprise ball valves or butterfly valves, for example. Suitable valves can be obtained, for example, from Fisher Controls International, LLC (301 S. 1st Avenue, Marshalltown, Iowa 50158). Alternatively, if desired, a plurality of nozzles, such as an entire bank of nozzles (e.g., disposed across the casting segment 150) can be controlled using a single control valve 210. As such, the valve bank can be configured to deliver a varying amount of coolant across the width of slab 140, such as by delivering more coolant to the middle of the slab as contrasted with the edge to ensure even cooling. It will be understood that the system can be adapted to provide flexibility for the control system 190 to allow control of individual nozzles or any number of spray nozzles, zones of nozzles, and manifold sections of nozzles or caster segments of nozzles with any number of reliable temperature measuring devices for accurate control.

Fig 2(B) illustrates another spray nozzle in accordance with an embodiment of the invention. The arrangement of the spray nozzle of FIG. 2(B) comprises a nozzle body 40 to which an air inlet 42 is connected by a screw threaded connection. The air inlet 42, in turn, is connected to an air supply line 44. The air inlet 42 locates, within the nozzle body 40, an air orifice member 46. For convenience, the nozzle body 40 is of two-part form, comprising parts 40a and 40b but this need not always be the case. The part 40b further serves as a connector to which a lance 62 (discussed below) is secured.

The nozzle body 40 further includes a water inlet port 48 to which a water inlet member 50 is secured by a screw-threaded connection, the water inlet member 50 being secured to a water supply line 52.

The nozzle body 40 is formed with a passage 54 in which is located a water orifice member 56 to convey water from the water inlet port 48 to an annular chamber 58 defined around the air orifice member 46. Water from the chamber 58 is able to flow through a cross-slot 46a to a mixing zone 60 where the air flow forms the water into a mist of water droplets, the mist of water droplets being conveyed along the lance 62 and through a spray head 64 to the desired location.

The water orifice body 56 comprises a substantially cylindrical body, part 56a of which is formed with screw-thread formations to allow the water orifice body 56 to be secured within the passage 54 formed in the nozzle body 40. The water orifice body 56 is formed with a through bore 66 shaped to define a region 68 of reduced diameter forming an orifice or restriction to the rate at which water can flow through the orifice body 56. The through bore 66 is closed, at its end remote from the region 68 by an access cap 70 which is securable in position by a screw-threaded connection. The water orifice body 56 further includes a water inlet port 72 defined by a passage perpendicular to, and communicating with, the through bore 66.

In order to minimize or prevent leakage of water between the nozzle body 40 and the water orifice member 56, a deformable sealing washer 74 (made, for example, from copper) is conveniently trapped therebetween.

In use, with the spray nozzle connected to the air and water supply lines 44, 52 as illustrated, water is supplied to the inlet port 48 of the nozzle body 40 to the water orifice member 56 from where it flows along the through bore 66 and through the region 68 to the annular chamber 58. From the annular chamber 58, water is able to flow through the cross-slot 46a to the mixing zone 60 where the action of the air supplied through the air orifice member 46 causes the water to atomize and form a mist of water droplets. The mist of water droplets is carried through the lance 62 to be delivered by the head 64 in the desired location and in the desired pattern.

In the event that a blockage forms in the through bore 66 formed in the water orifice member 56, rather than requiring the nozzle to be totally removed and dismantled, the access cap 70 can be removed from the water orifice body 56, and compressed air supplied to the through bore 66. The action of applying the compressed air will typically clear the blockage thus, once the access cap 70 has been re-secured in position, normal operation of the spray nozzle can continue. In the event that the application of compressed air to the through bore 66 in this manner is unsuccessful in clearing the blockage, then the water orifice body 56 can be removed from the remainder of the spray nozzle to permit cleaning, replacement or servicing thereof again without requiring removal of the complete spray nozzle. After cleaning of the water orifice body 56, it can be returned to its operative position as shown in FIG. 2(B), typically with the sealing washer 74 having been replaced in order to maintain the integrity of the seal between the water orifice body 56 and nozzle body 40. It will be appreciated that both of these operations can be conducted without disconnecting the nozzle from the water and air supply lines, and so can be conducted relatively quickly and with minimum disruption to the production process.

A further advantage of the arrangement illustrated in FIG. 2(B) as compared to conventional arrangements is that, in the event that it is desired to vary the rate at which the mist of water droplets is delivered, this can be achieved by replacing the water orifice body 56 with one having a region 68 of a different diameter. Again, clearly this can be achieved without requiring replacement of the entire spray nozzle.

The arrangement described herein for nozzle 200 may be used in other ways as well. For example, rather than providing an access cap 70 to close the end of the through bore 66, a further inlet line could be connected thereto. One possibility is to connect an additional air line thereto. This has the advantage that, by appropriate control over the pressure of the additional air line, the water supply rate can be changed without having to adjust its supply pressure. Further, the water is, at least partially, atomized prior to reaching the mixing zone 60, thereby permitting the nozzle to be used in the formation of a spray of reduced droplet size compared to typical arrangements.

The nozzle may be modified to orientate the water inlet port 72 such that it is tangential to the through bore 66, thereby imparting a swirling motion to the water, as shown in Figure 2(C). The formation of a swirling motion in the water results in the water passing through the region 68 in the form of a hollow conical spray. Consequently, the size of the region 68 can be increased, leading to a reduction in the risk of it becoming blocked, without resulting in an increase in the rate at which water passes through the region 68.

In further accordance with the invention, a control system is provided operably coupled to the cooling means and the temperature sensing means. The control system is adapted and configured to control the cooling system to cool the material as it passes through the caster. For purposes of illustration and not limitation, as embodied herein and as depicted in FIG. 3, a control system 190 is provided to control the cooling of slab 140 as it passes through caster 110. Control system 190 includes a processor 194 provided, for example, in the form of a general purpose computer that is adapted and configured to run a software program for operating the cooling system 170 of system 100 to cool slab 140.

Temperature measuring device 180 is operably coupled to control system 190. In operation, the amount of cooling fluid provided by way of nozzles 200 is controlled by operating one or more valves, for example, in a valve manifold 196, if desired, in order to achieve a desired surface temperature of slab 140 at a given point in caster 110.

In accordance with one embodiment of the invention, a predetermined cooling profile is provided for the material being cast.

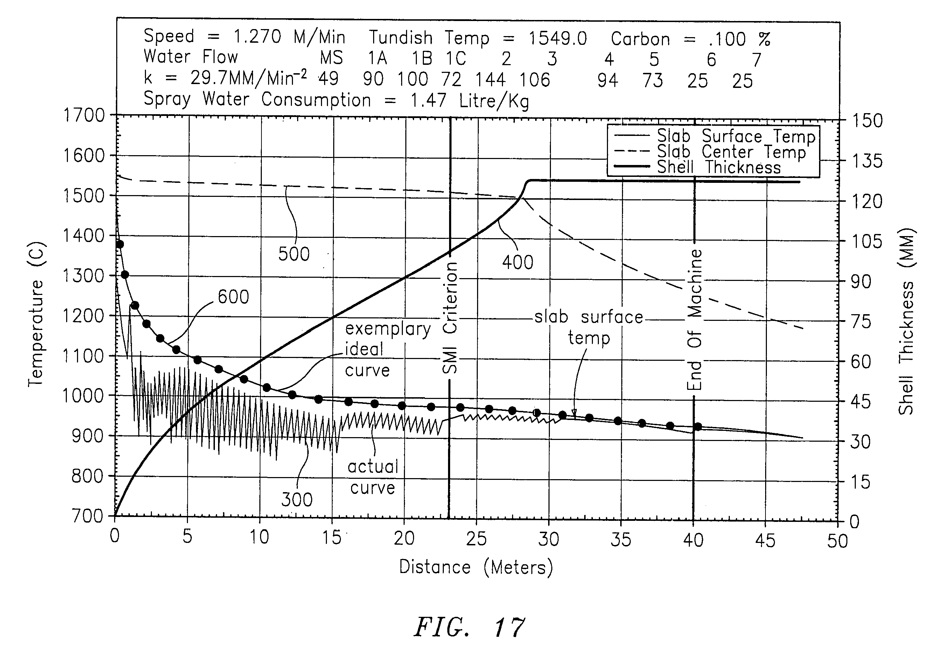

For purposes of illustration and not limitation, the predetermined cooling profile can be similar to an actual cooling profile, particularly where a system made in accordance with the invention is provided as a retrofit to an existing caster. An example of actual cooling profiles for steel are depicted in FIG. 17 at a caster speed of 1.270 meters/minute with a tundish temperature of 1549 degrees Centigrade. Cooling water flow rates are provided for different cooling zones of the caster.

Specifically, the cooling curve depicted in FIG. 17 indicates the change in temperature as a function of distance traveled within the caster. Curves are depicted for actual slab surface temperature 300, actual shell thickness 400 (in millimeters) and actual slab center temperature 500. An exemplary predetermined, or ideal, cooling curve 600 is also depicted in FIG. 17 for purposes of illustration and not limitation. As depicted, ideal cooling curve 600 has an appearance that is similar to actual curve 300. The shape of curve 300 depends on a variety of factors, such as the design of the caster, the material being cast, the dimensions of the slab and the casting speed, among others. The ideal cooling curve 600 for steel depicted in FIG. 17 has an appearance similar to actual curve 300 with certain differences. For example, the highly oscillating temperature reading of curve 300 is attributable to the slab surface 140 coming into contact with the rollers 160 of the caster. As depicted, ideal cooling profile 600 does not include such variation, but instead demonstrates a smoother appearance. However, it will be recognized that ideal curve 600 can have a variety of shapes and stepped regions that more closely mimics the actual curve. Computer models for cooling curves are known in the art and described, for example, in the following publications:

"Heat Transfer and Solidification Modeling in the Continuous Casting of Multi-Component Steels," Hardin and Beckerman, HTD-Vol. 347, National Heat Transfer Conference, Volume 9, ASME 1997, pp. 9-20.

"A Transient Simulation and Dynamic Spray Cooling Control Model for Continuous Steel Casting," Hardin, Liu, Kapoor and Beckerman, Metallurgical and Materials Transactions B, Vol. 34B, June 2003, pp. 297-306.

"Development of a Model for Transient Simulation and Control of a Continuous Steel Slab Caster," Hardin, Liu and Beckerman, Materials Processing in the Computer Age III, Edited by V.R. Voller and H. Henein, The Minerals, Metals & Materials Society, 2000, pp. 61-74.

Each of the above-referenced publications is incorporated by reference herein in its entirety. Thus, when using a system made in accordance with the invention that is provided in the form of a retrofit kit, for example, the system can be used to operate the caster to closely operate within its design range. However, a system made in accordance with the invention can facilitate design of new, efficient casters that take maximum advantage of the benefits accorded by the invention.

Thus, in accordance with another embodiment of the invention, an ideal cooling curve can be provided that is intended for use with a new caster, as opposed to a caster that is retrofitted with a system made in accordance with the invention. Such an ideal cooling curve is optimized based on the caster design to take maximum advantage of the benefits of active feedback temperature control provided by the invention.

Accordingly, the temperature of the slab is preferably reduced in accordance with a predetermined curve such as ideal cooling curve. Cooling the metal in accordance with such an ideal profile can provide many advantages. These advantages include, among other things, raising yield due to lower defects in the material, and a higher overall consistency of the material produced. Again, it will be understood that the curve will be generated empirically and used as a reference point by the system of the invention to cool steel.

In operation, as depicted in FIG. 3, a predetermined target surface temperature can be input into the control system, such as from a predetermined ideal cooling curve. Next, the controller selects a desired flow rate of coolant either empirically or from other previous data. Controller obtains the desired flow rate by operating controllable valves in the cooling means 170. Nozzles direct coolant at slab 140, thereby cooling the slab. Temperature is continually monitored using temperature sensor 180. Once a steady state is achieved, any variation in the steady state, for example, a low temperature reading read by controller 190, can result in coolant flow being reduced until the temperature rises to an acceptable level. Likewise, a detected temperature that is too high can result in a coolant increase. In addition

Accordingly, if desired, a real time mosaic of the surface temperature of slab 140 can be compiled and continuously updated to continuously evaluate whether sufficient coolant is being supplied to slab by the cooling means 170.

In addition, by performing active feedback control as described herein, the caster can be operated at its maximum practical speed while minimizing the chances of a breakout. For example, if the temperature is being monitored continuously, it is possible to detect the presence of overheated areas. This could be accomplished, for example through the use of smart logic in the computer program causing an alarm when there is a sharp temperature rise in the metal surface temperature. Reaction to a break out could be quicker due to the active link of the temperature sensing device and the smart logic of the computer program.

Mitigating steps can also be taken, including compensating for excessive temperature and/or temperature spikes by increasing the fluid flow in those regions of the slab upstream of the temperature detection point. If desired, such cooling can also be applied downstream of the detection point in order to properly cool the slab to the extent that the slab should have been cooled when the temperature rise was detected. Moreover, temperature sensing devices 180 can be positioned strategically inside caster 110 in a manner to accurately predict the cooling fluid flows in time for the cooling system to react to changing conditions of temperature. The control system 190 is adapted and configured to maintain the temperature across the face of the slab 140 as evenly as possible near the optimum temperature.

In accordance with still another aspect of the invention, caster speed control can be employed to control the surface temperature of the material. For purposes of illustration and not limitation, as embodied herein, the logic of the computer program that operates control system 190 may be written to include caster speed control as another method to help keep the metal surface temperature controlled properly. In employing this approach, direct temperature feedback can be utilized from temperature sensors 180 to control the speed. Thus, if it is desired to run caster 110 at a slower speed, the rate of coolant can be decreased to match the slow down in the casting speed. This can be done by monitoring the surface temperature and the output of the mill. If it is desired to operate caster 110 more slowly less coolant would be provided. Conversely, if it is known that there is sufficient operating margin for operating safely at higher casting speeds, the rate of coolant flow can be selectively increased resulting in an increase of the casting process.

In accordance with another aspect of the invention, the control system 190 can be adapted and configured to revert from a state in which it performs active feedback control as described herein to a fail-safe condition wherein cooling is performed in accordance with a predetermined fluid control algorithm. Such predetermined algorithms are well known in the art, and generally represent how casting machines are currently controlled. Providing such a fail safe mechanism can be useful if the active feedback system malfunctions. Without a backup system in place, it would be necessary to shut down the mill, which is costly. By providing a default setting, the caster can continue to operate, saving a great deal of time and money since production can continue. It may also be desirable to default to such a fail safe setting if it is desired to run diagnostics on the active feedback system. When the active feedback system is repaired and/or when such diagnostics have been completed, the system can be configured to resume active feedback control.

The system, method and machine readable program described herein can be provided with a new caster delivered from a manufacturer. Alternatively, if desired, the system, method and machine readable program described herein can be provided in the form of a retrofit kit for an existing caster.

All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Block diagrams and other representations of circuitry herein represent conceptual views of illustrative circuitry and software embodying the principles of the invention. Thus the functions of the various elements shown in the Figures may be provided through the use of dedicated hardware as well as hardware capable of executing software in association with appropriate software, as appropriate. When provided by a processor, the functions may be provided by a single dedicated processor, by a single shared processor, or by a plurality of individual processors, some of which may be shared. The functions of those various elements may be implemented by, for example, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

Similarly, it will be appreciated that the system flows described herein represent various processes which may be substantially represented in computer-readable medium and so executed by a computer or processor, whether or not such computer or processor is explicitly shown. Moreover, the various processes can be understood as representing not only processing and/or other functions but, alternatively, as blocks of program code that carry out such processing or functions.

The methods and systems of the present invention, as described above and shown in the drawings, provide for a casting system with superior properties including increased yield and reliability. It will be apparent to those skilled in the art that various modifications and variations can be made in the device and method of the present invention without departing from the spirit or scope of the invention. Thus, it is intended that the present invention include modifications and variations that are within the scope of the appended claims and their equivalents.

The invention includes a system, method and machine readable program for dynamically controlling the casting of a material. Generally, the systems and methods described herein include an active control feedback system or aspects thereof including a temperature sensing device that is well-suited for the harsh environment of the interior of a caster such as a caster for casting metal. Temperature measurement can be accomplished either directly or indirectly. The system is configured to compare the measured temperature with an ideal casting temperature. The temperature sensing device is operably coupled to a cooling device that modulates a flow of coolant to dynamically cool the material being cast. In accordance with one embodiment of the invention, the cooling device includes a plurality of nozzles for delivering one or more cooling fluids to the material being cast.

**Claims**

1. A caster for continuously casting metal including:

   a) a mold adapted and configured to mold molten metal into a metal strand;
   b) a cooling system disposed downstream of the mold adapted and configured to controllably cool and substantially solidify the strand before exiting the caster; and
   c) a temperature measuring device adapted and configured to detect the surface temperature of the strand, the temperature sensor including:

   i) a sensor adapted and configured to detect the temperature of the strand; and
   ii) a gas purge line operably coupled to the sensor, the gas purge line being adapted and configured to deliver a gas purge to deflect debris from a region of the strand being monitored by the temperature sensor.

2. The caster of Claim 1, wherein the gas purge prevents coolant from affecting accuracy of temperature measurement.

3. The caster of Claim 1, wherein the sensor directly contacts the strand to measure the strand temperature.

4. The caster of Claim 3, wherein the sensor includes a thermocouple.

5. The caster of Claim 1, wherein the sensor includes a photon sensor that detects photons emitted from the strand to measure the strand temperature.

6. The caster of Claim 5, further comprising an elongate tubular member having a first end disposed proximate the strand and a second end disposed proximate the sensor, the tubular member being adapted and configured to permit passage of photons emitted by the strand from the first end of the tubular member to the sensor.

7. The caster of Claim 6, wherein the gas purge line directs the gas purge through the tubular member.

8. The caster of Claim 7, wherein the purge line is adapted and configured to purge debris away from a radiation path defined between the slab and the photon sensor.

9. The caster of Claim 8, wherein the first end of the tubular member is angled to facilitate purging of debris away from the radiation path.

10. The caster of Claim 5, wherein the photon sensor includes a pyrometer.

11. The caster of Claim 10, wherein the pyrometer is sensitive to a wavelength in at least one of (i) the ultraviolet range of the electromagnetic spectrum, (ii) the visible range of the electromagnetic spectrum and (iii) the near infrared range of the electromagnetic spectrum.

12. The caster of Claim 11, wherein the pyrometer is sensitive to wavelengths having a length less than about 0.5 microns.

13. The caster of Claim 10, wherein the pyrometer is a two-color pyrometer.

14. The caster of Claim 1, further comprising:

   a) a control system operably coupled to the cooling system and the temperature sensor, the control system being adapted and configured to adjust the flow of coolant to the strand in response to a change in strand temperature detected by the temperature sensor.

15. The caster of Claim 14, wherein the coolant includes fluid selected from the group consisting of water, air and combinations thereof.

16. The caster of Claim 14, wherein the control system is adapted and configured to individually control at least one of (i) an individual cooling nozzle and (ii) a bank of cooling nozzles.

17. The caster of Claim 1, wherein the temperature sensor detects the surface temperature of the strand at a location downstream of at least one cooling nozzle.

18. The caster of Claim 14, wherein the control system is adapted to perform at least one of: (i) maintaining a substantially controlled surface temperature across the surface of the strand while it solidifies, (ii) controlling the speed of the caster, (iii) controlling the surface temperature of the stream of material by adjusting the speed of the caster or (iv) defaulting from active feedback control to a default cooling setting.

*FIG. 1*

FIG. 2(A)

FIG. 2(B)

FIG. 2(C)

*FIG. 3*

EP 1 849 539 A1

FIG. 4(A)

FIG. 4(B)

EP 1 849 539 A1

FIG. 5

FIG. 6

FIG. 7

FIG. 8

High
Temperature
Tip

Threaded
Housing,596

Ceramic Tube

592

590

Thermocouple
Wire,594

593

Spring,588

586

GRID SENSOR DESIGN

FIG. 9

FIG. 10

To Control
System,190

700b

700a

792

786

782

780

110

140

*FIG. 11*

EP 1 849 539 A1

Fiber Optics To
Electronics
(10'-25' Long)

880

800b

Purge Air
(Depending On
Distance and
Position)

884

800a

882

Field of View

140

HOT STEEL

FIG. 12(A)

Air →

Water →

Pyrometer

Input/Output

Purge Air

Cooling Nozzle

1200a

1200a

Clips or Clamps to Hold
Pyrometer to Cooling Nozzle

*FIG. 12(B)*

EP 1 849 539 A1

FIG. 13(A)

EP 1 849 539 A1

*FIG. 13B*

FIG. 13(C)

Prediction chart for water-vapor transmittance: (a) 0.6 to 4.0 μm: (*b*) 4 to 26 μm.

*FIG. 13(D)*

Thermocouple
Readout

Type B Thermocouple
(Embedded)

Fiber Optic
Cable

Optics

Oxyacetylene Torch

Steel Block

Pyrometer Readout

Emissivity = Pyrometer Measure Temperature/Thermocouple Measured Temperature

*FIG. 13(E)*

EP 1 849 539 A1

$$y = -0.0003x + 1.3231$$
$$R^2 = 0.8014$$

*FIG. 13(F)*

*FIG. 13(G)*

FIG. 13(H)

EP 1 849 539 A1

FIG. 13(I)

Circuit card fits in groove
and is cemented to
photodiode that fits in hole

Nut(4)

2868

e.g. Photodiode,2846

2840    2850    2866    2864
                        weld

2856                            2872              2880

e.g.welds

2844

2854

2830        2852

2826                                    2870

2824

Air spaces,2874

O'ring,2865

2867

2862    2848    O'ring,2845    2842    lens held in place
with clip and sealed
with o'ring

2860

FIG. 13(J)

EP 1 849 539 A1

FIG. 14

EP 1 849 539 A1

FIG. 15

EP 1 849 539 A1

EP 1 849 539 A1

1480

1486 — 1488 — 1486

1486

1482

140

FIG. 16

44

FIG. 17

**EP 1 849 539 A1**

**European Patent Office**

**EUROPEAN SEARCH REPORT**

Application Number

EP 07 00 8704

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BE 822 744 A1 (CENTRE RECH METALLURGIQUE (LIÈGE, BE)) 14 March 1975 (1975-03-14) * page 2, paragraph 1 * * page 2, paragraph 5 - paragraph 6 * * claims 1-5; figure 1 * ----- | 1-18 | INV. B22D11/18 G01J5/04 |
| X | BE 884 195 A4 (CENTRE RECH METALLURGIQUE) 5 January 1981 (1981-01-05) * page 1, paragraph 1 * * page 2, line 5 - line 14 * * claim 1 * | 1-18 | |
| X | & BE 862 611 A1 (CENTRE RECH METALLURGIQUE) 3 July 1978 (1978-07-03) * page 2, paragraph 4 * * page 3, line 1 - page 5, paragraph 2 * * claims 1-5; figures 1-5 * ----- | 1-18 | |
| Y | US 3 559 485 A (HOVIS JAMES E ET AL) 2 February 1971 (1971-02-02) * column 1, paragraph 1 * * column 4, line 5 - line 35 * * claims 1-10 * ----- | 1-18 | |
| Y | JP 08 267207 A (KAWASAKI STEEL CO) 15 October 1996 (1996-10-15) * abstract; figures 1,2 * ----- | 1-18 | TECHNICAL FIELDS SEARCHED (IPC) B22D G01J |
| Y | JP 62 230464 A (SUMITOMO METAL IND) 9 October 1987 (1987-10-09) * abstract; figures 1-3 * ----- | 1-18 | |
| Y | JP 60 015059 A (NIPPON KOKAN KK) 25 January 1985 (1985-01-25) * abstract; figures 1-5 * ----- | 1-18 | |
|  | -/-- | | |

The present search report has been drawn up for all claims

| Place of search | Date of completion of the search | Examiner |
|---|---|---|
| Munich | 31 August 2007 | Lombois, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 07 00 8704

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 4 073 332 A (ETIENNE ARLETTE THERESE) 14 February 1978 (1978-02-14) * column 2, line 14 - line 34 * * column 2, line 54 - line 63 * * column 4, line 27 - line 33 * * column 5, line 6 - line 10 * ----- | 1-18 | |
| A,D | US 4 699 202 A (GILLES HERBERT L [US]) 13 October 1987 (1987-10-13) * column 1, line 47 - line 50 * * column 2, line 8 - line 21 * * column 3, line 5 - line 41 * ----- | 1-18 | |

TECHNICAL FIELDS
SEARCHED      (IPC)

The present search report has been drawn up for all claims

| Place of search | Date of completion of the search | Examiner |
|---|---|---|
| Munich | 31 August 2007 | Lombois, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 00 8704

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2007

| Patent document cited in search report | | Publication date | Patent family member(s) | | Publication date |
|---|---|---|---|---|---|
| BE 822744 | A1 | 14-03-1975 | NONE | | |
| BE 884195 | A4 | 05-01-1981 | NONE | | |
| BE 862611 | A1 | 03-07-1978 | LU | 80736 A1 | 13-04-1979 |
| US 3559485 | A | 02-02-1971 | BE | 745237 A1 | 01-07-1970 |
| | | | DE | 2008581 A1 | 03-09-1970 |
| | | | DE | 7006713 U | 26-08-1971 |
| | | | ES | 373820 A1 | 16-02-1972 |
| | | | FR | 2031278 A5 | 13-11-1970 |
| | | | GB | 1247808 A | 29-09-1971 |
| | | | NL | 7002194 A | 27-08-1970 |
| JP 8267207 | A | 15-10-1996 | NONE | | |
| JP 62230464 | A | 09-10-1987 | NONE | | |
| JP 60015059 | A | 25-01-1985 | NONE | | |
| US 4073332 | A | 14-02-1978 | NONE | | |
| US 4699202 | A | 13-10-1987 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 79607406 P
- US 70907007 A
- US 4073332 A
- US 4699202 A
- US 20050247066 A1
- US 20060000219 A1
- US 4521088 A
- US 5785426 A
- US 5146244 A
- US 4836689 A
- US 4786188 A
- US 6123455 A
- US 5986272 A
- US 5949539 A
- US 6036116 A
- US 6729562 B
- US 6578777 B
- US 73681007 A

### Non-patent literature cited in the description

- **HARDIN ; BECKERMAN.** Heat Transfer and Solidification Modeling in the Continuous Casting of Multi-Component Steels. *HTD-Vol. 347, National Heat Transfer Conference,* 1997, vol. 9, 9-20
- **HARDIN ; LIU ; KAPOOR ; BECKERMAN.** A Transient Simulation and Dynamic Spray Cooling Control Model for Continuous Steel Casting. *Metallurgical and Materials Transactions B,* June 2003, vol. 34B, 297-306
- Development of a Model for Transient Simulation and Control of a Continuous Steel Slab Caster. **HARDIN, LIU ; BECKERMAN.** Materials Processing in the Computer Age III. The Minerals, Metals & Materials Society, 2000, 61-74